(19)

**Europäisches Patentamt**

**European Patent Office**

**Office européen des brevets**

(11) **EP 4 618 651 A1**

(12) **EUROPEAN PATENT APPLICATION**
published in accordance with Art. 153(4) EPC

(43) Date of publication:
**17.09.2025 Bulletin 2025/38**

(21) Application number: **22964739.1**

(22) Date of filing: **08.11.2022**

(51) International Patent Classification (IPC):
**H04W 72/04** $^{(2023.01)}$     **H04B 7/06** $^{(2006.01)}$

(52) Cooperative Patent Classification (CPC):
**H04B 7/06; H04W 72/04**

(86) International application number:
**PCT/CN2022/130729**

(87) International publication number:
**WO 2024/098264 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **LIU, Wendong**
  **Dongguan, Guangdong 523860 (CN)**
• **CAO, Jianfei**
  **Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **BEAM MANAGEMENT METHOD AND APPARATUS, DEVICE, STORAGE MEDIUM, AND PROGRAM PRODUCT**

(57)     A beam management method and apparatus, a device, a storage medium, and a program product, which relate to the technical field of communications. The method comprises: selecting a target beam resource from among K beam resources according to confidence levels which respectively correspond to the K beam resources, wherein K is an integer greater than or equal to 1 (710). One target beam resource is selected from among the K beam resources by means of the confidence levels which respectively correspond to the K beam resources. On the basis of confidence level assisted beam management, when a target beam resource is selected, the reliability of beam resources can be evaluated on the basis of confidence levels, and a more reliable target beam resource is acquired to carry out a data service, thereby achieving better spatial-domain and time-domain beam management.

710

Selecting a target beam resource from K beam resources based on confidences respectively corresponding to the K beam resources, wherein K is an integer greater than or equal to 1

FIG. 7

**Description**

**TECHNICAL FIELD**

Embodiments of the present disclosure relate to the technical field of communications, and in particular, relate to a method and apparatus for beam management, and a device, a storage medium and a program product thereof.

**RELATED ART**

In the related art, a solution for beam management is provided. In this solution, a plurality of optimal beam pairs are obtained by prediction based on an Artificial Intelligence (AI) model, and then a target beam pair is selected from the plurality of optimal beam pairs. However, how to select a reliable target beam pair from the plurality of optimal beam pairs requires further research and discussion.

**SUMMARY**

Embodiments of the present disclosure provide a method and apparatus for beam management, and a device, a storage medium and a program product thereof. The technical solutions are as follows.

According to some embodiments of the present disclosure, a method for beam management is provided. The method includes:

selecting a target beam resource from K beam resources based on confidences respectively corresponding to the K beam resources, wherein K is an integer greater than or equal to 1.

According to some embodiments of the present disclosure, a method for beam management is provided. The method is applicable to a terminal device, and the method includes:

transmitting confidence information of K beam resources to a network device, wherein the confidence information is used to indicate confidences respectively corresponding to the K beam resources, K being an integer greater than or equal to 1.

According to some embodiments of the present disclosure, a method for beam management is provided. The method is applicable to a network device, and the method includes:

receiving confidence information of K beam resources from a terminal device, wherein the confidence information is used to indicate confidences respectively corresponding to the K beam resources, K being an integer greater than or equal to 1.

According to some embodiments of the present disclosure, an apparatus for beam management is provided. The apparatus includes:

a selecting module, configured to select a target beam resource from K beam resources based on confidences respectively corresponding to the K beam resources, wherein K is an integer greater than or equal to 1.

According to some embodiments of the present disclosure, an apparatus for beam management is provided. The apparatus includes:

a transmitting module, configured to transmit confidence information of K beam resources to a network device, wherein the confidence information is used to indicate confidences respectively corresponding to the K beam resources, K being an integer greater than or equal to 1.

According to some embodiments of the present disclosure, an apparatus for beam management is provided. The apparatus includes:

a receiving module, configured to receive confidence information of K beam resources from a terminal device, wherein the confidence information is used to indicate confidences respectively corresponding to the K beam resources, K being an integer greater than or equal to 1.

According to some embodiments of the present disclosure, a communication device is provided. The communication device includes a processor and a memory; wherein the memory is configured to store at least one computer program therein, wherein the processor is configured to load and run the at least one computer program, to cause the communication device to perform the above methods for beam management.

According to some embodiments of the present disclosure, a computer-readable storage medium is provided. The computer-readable storage medium stores at least one computer program therein, wherein the at least one computer program, when loaded and run by a processor, causes the processor to perform the above methods for beam management.

According to some embodiments of the present disclosure, a chip is provided. The chip includes at least one programmable logic circuit and/or at least one program instruction, wherein the chip, when running, is caused to perform the above methods for beam management.

According to some embodiments of the present disclosure, a computer program product is provided. The computer program product includes at least one computer program stored in a computer-readable storage medium; wherein the at least one computer program, when read from the computer-readable storage medium and loaded and run by a processor, causes the processor to perform the above methods for beam management.

The technical solutions according to the embodiments of the present disclosure achieve at least the following beneficial effects.

A target beam resource is selected from K beam resources based on the confidences respectively corresponding to the K beam resources. In this confidence-based beam management, the reliability of beam resources is evaluated based on confidences during selection of the target beam resource, and thus more reliable target beam resources are acquired for data services, such that better spatial and temporal beam management is achieved.

In addition, the confidences of the beam resources are quantized, and the reliability of the beam resources is evaluated based on the confidences. The system considers beam resources reliably and thus reduces measurement overheads when the confidences are high, whereas the system scans the beam resources and performs measurements on the beam resources again when the confidences are low, such that reliable beam resources are selected and used.

**BRIEF DESCRIPTION OF DRAWINGS**

FIG. 1 is a schematic diagram of a network architecture according to some embodiments of the present disclosure;
FIG. 2 is a schematic diagram of a neuronal structure according to some embodiments of the present disclosure;
FIG. 3 is a schematic diagram of a neural network according to some embodiments of the present disclosure;
FIG. 4 is a schematic diagram of a convolutional neural network according to some embodiments of the present disclosure;
FIG. 5 is a schematic diagram of an LSTM unit structure according to some embodiments of the present disclosure;
FIG. 6 is a schematic diagram of beam resource scanning according to some embodiments of the present disclosure;
FIG. 7 is a flowchart of a method for beam management method according to some embodiments of the present disclosure;
FIG. 8 is a schematic diagram of an AI model according to some embodiments of the present disclosure;
FIG. 9 is a schematic diagram of a method for beam management according to some embodiments of the present disclosure;
FIG. 10 is a schematic diagram of a method for beam management according to some embodiments of the present disclosure;
FIG. 11 is a schematic diagram of a method for beam management according to some embodiments of the present disclosure;
FIG. 12 is a schematic diagram of a method for beam management according to some embodiments of the present disclosure;
FIG. 13 is a schematic diagram of a method for beam management according to some embodiments of the present disclosure;
FIG. 14 is a schematic diagram of a method for beam management according to some embodiments of the present disclosure;
FIG. 15 is a block diagram of an apparatus for beam management according to some embodiments of the present disclosure;
FIG. 16 is a block diagram of an apparatus for beam management according to some embodiments of the present disclosure;
FIG. 17 is a block diagram of an apparatus for beam management according to some embodiments of the present disclosure;
FIG. 18 is a block diagram of an apparatus for beam management according to some embodiments of the present disclosure;
FIG. 19 is a block diagram of an apparatus for beam management according to some embodiments of the present disclosure;
FIG. 20 is a block diagram of an apparatus for beam management according to some embodiments of the present disclosure;
FIG. 21 is a schematic structural diagram of a terminal device according to some embodiments of the present disclosure; and
FIG. 22 is a schematic diagram of an architecture of a network device according to some embodiments of the present disclosure.

**DETAILED DESCRIPTION**

For clearer descriptions of the objectives, technical solutions, and advantages of the present disclosure, the embodiments of the present disclosure are further described in detail hereinafter with reference to the accompanying drawings.

The network architecture and services scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art may understand that, with the evolution of the network architecture and the emergence of new services scenarios, the technical solutions according to the embodiments of the present disclosure are also applicable to similar technical problems.

For clearer descriptions of the objectives, technical solutions, and advantages of the present disclosure, the embodiments of the present disclosure are further described in detail hereinafter with reference to the accompanying drawings.

The network architecture and services scenarios described in the embodiments of the present disclosure are provided for the purpose of illustrating the technical solutions provided in the embodiments of the present disclosure more clearly and do not constitute a limitation on the technical solutions provided in the embodiments of the present disclosure. Those of ordinary skill in the art may know that, with the evolution of the network architecture and the emergence of new services scenarios, the technical solutions provided in the embodiments of the present disclosure are also applicable to similar technical problems.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN) system, a wireless fidelity (Wi-Fi) system, a 5$^{th}$ generation (5G) system, or other communication systems.

Generally, a conventional communication system supports a limited quantity of connections and is easy to implement. However, with the development of communication technologies, a mobile communication system supports not only conventional communications modes but also other communications modes, such as device-to-device (D2D) communications, machine-to-machine (M2M) communications, machine-type communications (MTC), vehicle-to-vehicle (V2V) communications, or vehicle-to-everything (V2X) communications. The embodiments of the present disclosure are also applicable to these communication systems.

The communication system in the embodiments of the present disclosure may be applicable to a carrier aggregation (CA) scenario, a dual connectivity (DC) scenario, and a standalone (SA) networking scenario.

The communication system in the embodiments of the present disclosure may be applicable to an unlicensed spectrum. The unlicensed spectrum may also be considered as a shared spectrum. Alternatively, the communication system in the embodiments of the present disclosure may be applicable to a licensed spectrum. The licensed spectrum may also be considered as an unshared spectrum.

The embodiments of the present disclosure may be applicable to the NTN system and a terrestrial network (TN) system.

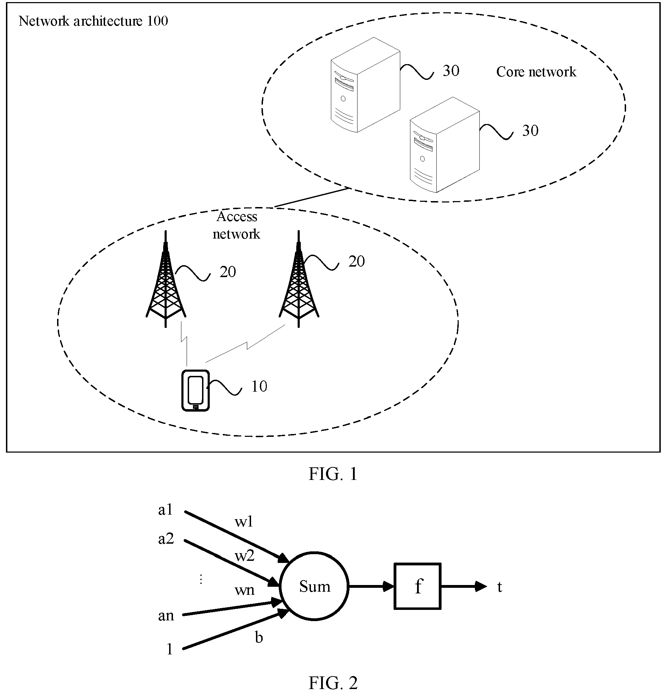

FIG. 1 is a schematic diagram of a network architecture 100 according to some embodiments of the present disclosure. The network architecture 100 may involve a terminal device 10, an access network device 20, and a core network device 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may also be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5G system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. At least one terminal device 10 may be distributed in a cell managed by each access network device 20. In the embodiments of the present disclosure, the "terminal device" and the "UE" are generally used interchangeably, and those skilled in the art shall understand that the two generally have the same meaning.

The access network device 20 is a device deployed in an access network to provide a wireless communication function for the terminal device 10. The access network device 20 may include various forms of macro base stations, micro base stations, relay stations, access points, and the like. In systems employing different radio access technologies, devices with the function of the access network device may have different names, for example, gNodeB or gNB in a 5G NR system. As the communication technologies evolve, the name "access network device" may change. For the convenience of description, in the embodiments of the present disclosure, the above apparatuses providing the wireless communication function for the terminal device 10 are collectively referred to as the access network device. In some embodiments, a communication relationship may be established between the terminal device 10 and the core network device 30 using the access network device 20. For example, in an LTE system, the access network device 20 may be an evolved universal terrestrial radio access network (EUTRAN) or at least one eNodeB in the EUTRAN. In a 5G NR system, the access network device 20 may be a radio access network (RAN) or at least one gNB in the RAN. In the embodiments of the present disclosure, unless otherwise specified, the term "network device" is the access network device 20, e.g., a base station.

The core network device 30 is a device deployed in a core network. The core network device 30 mainly functions to provide a user connection, user management and service bearing, and to provide an interface to an external network as a bearer network. For example, core network devices in the 5G NR system may include devices such as an access and mobility management function (AMF) entity, a user plane function (UPF) entity, and a session management function (SMF) entity.

In some embodiments, the access network device 20 communicates with the core network device 30 using a specific air interface technology, e.g., an NG interface in the 5G NR system. The access network device 20 communicates with the terminal device 10 using a specific air interface technology, e.g., over a Uu interface.

The "5G NR system" in the embodiments of the present disclosure may also be referred to as a 5G system or an NR system, but those skilled in the art may understand its meaning. The technical solutions according to the embodiments of the present disclosure may be applicable to the LTE system, the 5G NR system, an evolved system subsequent to the 5G NR system, a narrowband Internet of things (NB-IoT) system, and other communication systems. This is not limited in the present disclosure.

In the embodiments of the present disclosure, the network device provides services for a cell. The terminal device communicates with the network device over a transmission resource (for example, a frequency-domain resource or a spectrum resource) on a carrier used by the cell. The cell may be a cell corresponding to the network device (for example, the base station). The cell may belong to a macro base station or a base station corresponding to a small cell. The small cell herein may include a metro cell, a micro cell, a pico cell, a femto cell, and the like. These small cells have the characteristics of small coverage and low transmit power, and are applicable to providing high-rate data transmission services.

Prior to description of the technical solutions provided in the present disclosure, some background technical knowledge involved in the present disclosure is described. The following related arts, as optional solutions, may be arbitrarily combined with the technical solutions according to the embodiments of the present disclosure, and all fall within the protection scope of the embodiments of the present disclosure. The embodiments of the present disclosure include at least part of the following content.

1. Neural network and machine learning

A neural network is an operational model consisting of a plurality of neuron nodes connected to each other. The neuronal structure is illustrated in FIG. 2. The connections between the nodes (w1, w2, ..., wn and b) represent weighted values from input signals (a1, a2, ..., an and 1) to output signals, which are also referred to as weights. Each node makes a weighted sum of different input signals and outputs t using a specific activation function (f).

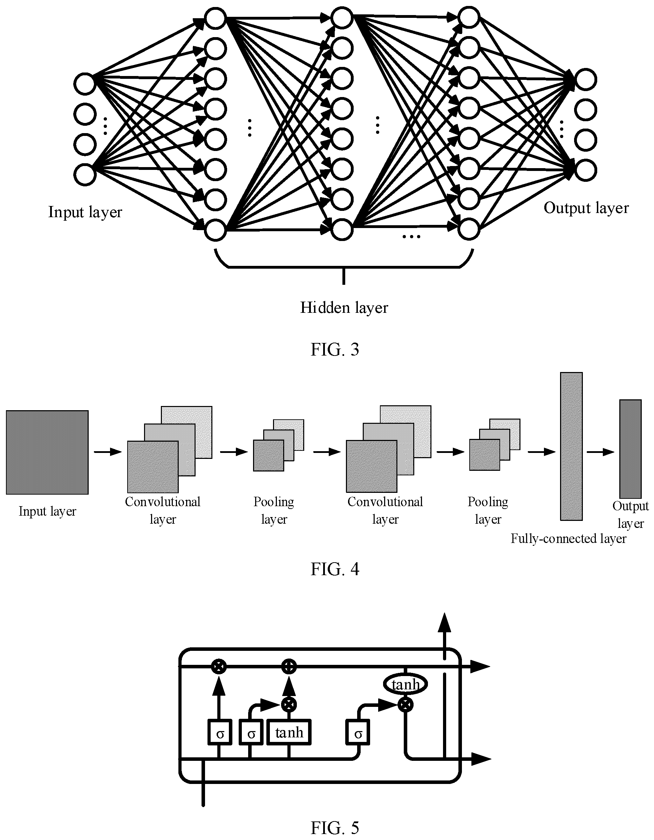

FIG. 3 illustrates a simple neural network, which includes an input layer, a hidden layer, and an output layer. Different outputs are generated through different connections between a plurality of neurons, weights, and activation functions, thereby fitting a mapping relationship from the inputs to the outputs. Each upper-level node is connected to all lower-level nodes thereof, and this fully-connected model is also referred to as a deep neural network (DNN).

A convolutional neural network (CNN) basically includes an input layer, a plurality of convolutional layers, a plurality of pooling layer, a fully-connected layer, and an output layer. As illustrated in FIG. 4, each neuron of a convolution kernel in the convolutional layer is locally connected to its inputs, and introduces a pooling layer to extract a local maximum feature or a mean feature from a layer. In this way, the number of parameters of a network is effectively reduced, and at the same time, local features are mined. Thus, the convolutional neural network can be quickly converged, thereby achieving excellent performance.

A recurrent neural network (RNN) is a neural network that models sequential data, and has made remarkable achievements in the field of natural language processing, such as machine translation and speech recognition. Specifically, the network memorizes information of past moments and uses the information in the calculation of a current output, that is, the nodes between the hidden layers are no longer unconnected but connected, and an input of a hidden layer includes not only an input layer but also an output of a hidden layer at a last moment. A common RNN includes a long short-term memory (LSTM) network, a gated recurrent unit (GRU) and other structures. FIG. 5 illustrates a basic LSTM cell structure, where $\sigma$ and tanh are activation functions. Different from the RNN which only takes the most recent state into consideration, the cell states of the LSTM determine which states should be reserved and which states should be discarded, which solves the defects of the long-term memory in the conventional RNN.

It should be noted that the embodiments of the present disclosure are merely described by taking the RNN as an example, without excluding expansions using the same working methods by replacing the RNN with a DNN, a CNN or another network structure.

2. Beam management in an NR system

In an NR system, communication in a millimeter-wave band is introduced, and a corresponding beam management mechanism is also introduced. Briefly, the beam management mechanism is divided into uplink beam management and downlink beam management. The downlink beam management mechanism includes processes of downlink beam scanning, optimal beam reporting at the UE, downlink beam indication at the network (NW), and the like.

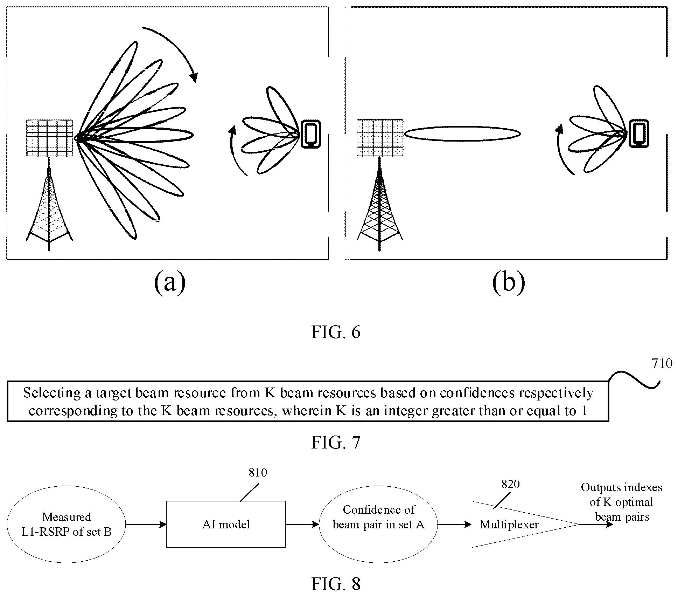

The downlink beam scanning refers to that the NW scans different transmit beam directions using downlink reference signals, i.e., synchronization signal and physical broadcast channel blocks (SSBs) and/or channel state information-reference signals (CSI-RSs). The UE uses different receive beams for measurement, such that all beam pairs are traversed, and the UE calculates a layer1-reference signal receiving power (L1-RSRP) value for each beam pair. As illustrated in FIG. 6(a), the UE traverses the transmit beams and the receive beams; and as illustrated in FIG. 6(b), the UE traverses the receive beams for a specific transmit beam.

Beam reporting refers to that the UE selects K transmit beams with the highest L1-RSRP by comparing the L1-RSRP values of all measured beam pairs, and then reports the K transmit beams to the network as uplink control information (UCI), wherein K is a positive integer. The L1-RSRP may be replaced with another beam link index, such as a layer1-signal to interference plus noise ratio (L1-SINR) (supported by the standards) and a layer1-reference signal receiving quality (L1-RSRQ) (not supported by the standards). After decoding the beam reporting from the UE, the NW carries a transmission configuration indication (TCI) state (including a transmit beam with an SSB or SCI-RS as a reference) over medium access control (MAC) signaling or downlink control information (DCI) signaling to complete beam indication for the UE. The UE uses a receive beam corresponding to the transmit beam for reception.

Described above is a basic process of beam management adopted in the existing NR system. When the UE moves, there is no support for the existing NR system to implement beam tracking and beam prediction for the mobile scenario of the UE. Therefore, the network and the UE need to trigger beam management processes periodically or aperiodically for readjustment to match the transmit beams with the receive beams.

3. AI-based beam management

AI-based beam management is a research direction of the current standards. Although the details of how to achieve better beam management based on AI have not been concluded at present, AI-based spatial and temporal beam predictions have been considered as typical use cases, and a preliminary agreement has been reached in the current implementation framework as follows.

(1) Beam prediction is implemented on a beam set A based on a measurement result on a beam set B.
(2) The beam set B is a subset of the beam set A, or the beam set B is different from the beam set A (e.g., narrow beams are adopted in the beam set A, and wide beams are adopted in the beam set B).
(3) An AI model is deployed at the NW side or the UE side.
(4) The measurement result on the beam set B may be L1-RSRP or other auxiliary information, such as a beam (pair) identifier (ID).

Under this framework, a matched signaling process is designed to support the AI functions, and hence the AI-based spatial beam prediction or temporal beam prediction is implemented and beam measurement overheads and access delays are reduced, such that the network and the UE achieve optimal beam pair matching more quickly.

An AI-based beam management method is discussed and researched in current standards, in which beam measurement overheads may be reduced, an access delay may be alleviated, and fast beam matching may be achieved by using the spatial and temporal beam predictions. Taking the spatial prediction as an example, in commonly used methods, an input is measurement information on a beam set B, e.g., L1-RSRP, and an output is directly at least one or more optimal beam (pairs). However, there may be two problems in this method.

(1) In a case where an optimal beam (pair) index is predicted by the AI model on the UE side or NW side, there is a possibility that the beam (pair) index is incorrectly predicted, that is, the optimal beam (pair) predicted by the AI model is not the actual optimal beam (pair). However, since the AI model does not indicate whether the predicted optimal beam (pair) is reliable or not, i.e., indicates the prediction confidence, the UE or the network fails to decide whether or not to adopt the prediction result of the AI model.

(2) In a case where multiple optimal beam (pair) indexes are predicted by the AI model on the UE side or NW side, since the AI model does not output which beam (pair) is more reliable and which beam (pair) has a higher probability of being selected, the UE side or NW side needs to acquire a beam (pair) to be finally used by performing further beam scanning on all predicted optimal beams (pairs) or by randomly selecting an optimal beam (pair) from the multiple optimal beams (pairs), which may result in performance instability and additional beam scanning overheads.

The above problems not only exist in the AI-based spatial beam prediction but also exist in the AI-based temporal beam prediction. In summary, for the AI-based beam management, how to indicate the reliability of one or more beam (pair) predicted by an AI model to guide the UE and/or the NW for better beam selection and beam management, is a problem to be researched and solved.

In related arts, in the beam management method in the NR system, the UE needs to travers all combinations of transmit beams and receive beams in a downlink P1 process. For example, assuming that the NW deploys 64 different downlink transmit directions (which are carried over 64 SSBs at the most) within a frequence range 2 (FR2), and the UE, upon reception, performs receive beam scanning simultaneously using a plurality of antenna panels (including only one receive beam panel), each of which has 4 receive beams, then the UE needs to measure at least 256 beam pairs, and thus needs downlink resource overheads for 256 resources. In terms of time, if each SSB cycle is about 20 ms, four SSB cycles are needed in order to complete the measurement of four receive beams (assuming the multiple antenna panels can perform beam scanning simultaneously), and at least 80 ms is needed.

In the beam management method in the NR system provided in the related art, with the increase in the number of beams in future large-scale multiple input multiple output (MIMO) systems, reference signal overheads and beam scanning delays increase to match optimal beam pairs. In this regard, the embodiments of the present disclosure provide a method for beam management, in which the confidences of beam resources are predicted by an AI model, with no need of transversing all transmit beams and receive beams. In this way, the resource overheads are reduced at the most.

It should be noted that downlink beam management is mainly introduced and described in the embodiments of the present disclosure, but it is understandable that the technical solutions of the present disclosure are also applicable to uplink beam management or beam management in sidelink communication.

FIG. 7 is a flowchart of a method for beam management method according to some embodiments of the present disclosure. The method may be applicable to a terminal device or a network device. The method includes following process 710.

In process 710, a target beam resource is selected from K beam resources based on confidences respectively corresponding to the K beam resources, wherein K is an integer greater than or equal to 1.

The beam resource may be a beam pair, a transmit beam, or a receive beam, which is not limited in the embodiments of the present disclosure. The beam pair is a combination of a transmit beam and a receive beam, for example, a combination of one transmit beam and one receive beam.

The confidence refers to the credibility of the beam resource, and is used to characterize the possibility that a beam resource is an optimal beam resource. The value range of the confidence is 0 to 1, excluding 0 and/or 1.

The value of K is not limited in the embodiments of the present disclosure. For example, K may be equal to 1, and may also be greater than 1.

The above K beam resources are selected from N beam resources, and are subsets of the N beam resources, wherein N is an integer greater than 1.

In some embodiments, a beam resource with a confidence that satisfies a first condition in the K beam resources is determined as the target beam resource.

In some embodiments, the first condition includes at least one of: the confidence being the highest; the confidence being greater than or equal to a first threshold; or the confidence falling within a first value range. The value of the first threshold and the specific range of the first value range are not limited in the embodiments of the present disclosure, and may be, for example, configured by a network, preconfigured, preset values specified in the standards, or dependent on implementation of a terminal device. For example, the first threshold may be 0.5, 0.4, 0.2 or other numerical values. For example, the first value range may be (0.5, 1), (0.4, 1), (0.2, 1) or other value ranges.

In some embodiments, at least one candidate beam resource is selected from the K beam resources based on the confidences respectively corresponding to the K beam resources; beam quality information respectively corresponding to the at least one candidate beam resource is obtained by performing a beam quality verification on the at least one candidate beam resource; and the target beam resource is selected based on the beam quality information respectively corresponding to the at least one candidate beam resource.

In some embodiments, a beam resource with a confidence that satisfies a second condition in the K beam resources is determined as the candidate beam resource. The second condition includes at least one of: the confidence being less than or equal to a second threshold; the confidence not falling within a first value range; or the confidence falling within a second value range. The value of the second threshold, the specific range of the first value range, and the specific range of the second value range are not limited in the embodiments of the present disclosure, and may be, for example, configured by a network, preconfigured, preset values specified in the standards, or dependent on implementation of a terminal device. For example, the second threshold may be the same as or different from the first threshold. For example, the second threshold may be 0.5, 0.4, 0.2 or other numerical values. For example, the first value range may be (0.5, 1), (0.4, 1), (0.2, 1) or other value ranges. For example, the second value range may be (0, 0.5), (0, 0.4), (0, 0.2) or other value ranges.

In some embodiments, the beam quality verification refers to an evaluation of the quality of the candidate beam resource, e.g., an L1-RSRP measurement of the candidate beam resource. The evaluation index of the quality of the beam resource (i.e., beam quality information) is not limited in the embodiments of the present disclosure, which includes but is not limited to one or a combination of an L1-RSRP, an L1-RSRQ, and an L1-SINR.

In some embodiments, in a case where the beam quality information of a candidate beam resource satisfies a third condition, the candidate beam resource is determined as the target beam resource. In some embodiments, the third condition includes at least one of: the beam quality information being greater than or equal to a first threshold, or the beam quality information being less than or equal to a second threshold. For example, the larger the beam quality information, the better the beam quality of the beam resource, and then the third condition is that the beam quality information is greater than or equal to the first threshold. For example, the smaller the beam quality information, the poorer the beam quality of the beam resource, and then the third condition is that the beam quality information is less than or equal to the second threshold. The values of the first threshold and second threshold are not limited in the embodiments of the present disclosure, and may be, for example, configured by a network, preconfigured, preset values specified in the standards, or dependent on implementation of a terminal device.

For example, an L1-RSRP value corresponding to a candidate beam resource is obtained by performing an L1-RSRP measurement of the candidate beam resource. In a case where the L1-RSRP value corresponding to the candidate beam resource is greater than or equal to the first threshold, the candidate beam resource is determined as the target beam resource.

In some embodiments, in a case where the beam quality verification is performed on a plurality of candidate beam resources and two or more candidate beam resources satisfy the third condition, one beam resource is randomly selected from the two or more candidate beam resources that satisfy the third condition as the target beam resource.

For example, the beam quality verification is performed on four candidate beam resources: N1, N2, N3 and N4. In a case where the candidate beam resources N1 and N2 satisfy the third condition, one beam resource is randomly selected from the candidate beam resources N1 and N2 as the target beam resource.

In some embodiments, the beam quality verification is performed on the candidate beam resource based on a reference signal. The specific reference signal is not limited in the embodiments of the present disclosure. For example, the beam quality verification is performed on the candidate beam resource based on an SSB, a CSI-RS, or other reference signals.

Using a scenario where a beam resource includes a beam pair consisting of a transmit beam and a receive beam as an example, a transmitter transmits a reference signal over the transmit beam to a receiver, and the receiver receives the reference signal over the receive beam, and performs beam quality measurement to obtain the beam quality information corresponding to the beam resource.

In some embodiments, the reference signal based on which the beam quality verification is performed on the candidate beam resource is configured by a network.

In some embodiments, since there are fewer candidate beam resources, during the configuration of a reference signal, a reference signal with lower frequency domain density and/or lower resource overheads than the SSB and the CSI-RS may be considered, which is not limited in the embodiments of the present disclosure.

In some embodiments, in a case where no candidate beam resource of which the beam quality information satisfies the third condition is present, it returns to the beam management mechanism provided in the related arts (which is also referred to as beam resource scanning), that is, the beam quality verification is performed on the N beam resources, and the target beam resource is selected based on the beam quality information.

For example, the beam quality information respectively corresponding to the N beam resources is obtained by performing the beam quality verification on the N beam resources, and the beam resource with the best beam quality information is determined as target beam resource.

For example, the L1-RSRP measurement is performed on the N beam resources, and the beam resource with the highest L1-RSRP value is determined as target beam resource.

In some embodiments, the confidences respectively corresponding to the N beam resources are obtained by an AI model. The AI model predicts the confidences of to the N beam resources based on the beam quality information of M beam resources, and a multiplexer acquires the K beam resources based on the confidences of the N beam resources. The M beam resources may be subsets of the N beam resources, and may also be unrelated to the N beam resources, which is not limited in the embodiments of the present disclosure. M is an integer great than 1, and N is an integer great than 1. It should be noted that the AI model may be or may not be deployed in the entity that performs the method embodiments.

For example, the method embodiments are applicable to a network device, and the AI model is deployed in a terminal device. That is, the terminal device runs the AI model to predict the confidences of the N beam resources, selects K beam resources, and reports the confidences corresponding to the K beam resources to the network device, and the network device selects the target beam resource based on the K beam resources.

For another example, the method embodiments are applicable to a network device, and the AI model is deployed in the network device. That is, the network device runs the AI model to predict the confidences of the N beam resources, selects K beam resources, and selects the target beam resource based on the K beam resources.

For another example, the method embodiments are applicable to a terminal device, and the AI model is deployed in the terminal device. That is, the terminal device runs the AI model to predict the confidences of the N beam resources, selects K beam resources, and selects the target beam resource based on the K beam resources.

In some embodiments, the AI model is deployed in the entity that performs the method embodiments. The confidences respectively corresponding to the N beam resources obtained by the AI model are acquired, wherein N is an integer great than 1; and K beam resources are selected from the N beam resources based on the confidences respectively corresponding to the N beam resources.

In some embodiments, the AI model outputs the confidences respectively corresponding to the N beam resources based on the beam quality information of the M beam resources, wherein M is an integer great than 1.

In some embodiments, the AI model outputs the confidences respectively corresponding to the N beam resources based on the L1-RSRPs of the M beam resources, wherein M is an integer great than 1.

In some embodiments, K beam resources are selected from the N beam resources by a multiplexer. In some embodiments, the multiplexer outputs the indexes of the K beam resources or outputs the indexes of the K beam resources and the confidences corresponding to the K beam resources, which is not limited in the embodiments of the present disclosure.

In some embodiments, K beam resources with the highest confidence are selected from the N beam resources by a multiplexer.

For example, as illustrated in FIG. 8, using a scenario where an optimal beam pair index is output using the basic framework structure for the AI-based spatial beam prediction as an example, the input of the AI model 810 is a measured L1-RSRP of a beam set B, and the output of the AI model 810 is a confidence vector consisting of the confidences respectively corresponding to the beam resources (beam pairs) in a beam set A. A multiplexer 820 selects K beam resources (optimal beam pairs) from the confidence vector output by the AI model 810, and outputs the indexes of the K beam resources (optimal beam pairs).

In some embodiments, the specific structure of the AI model is not limited. The AI model may adopt a DNN network architecture, and may also adopt other neural network architectures.

In some embodiments, the output layer of the AI model is a fully-connected layer. In some embodiments, the number of the neurons included in the fully-connected layer is equal to the number of the beam resources to be predicted (N beam resources).

In some embodiments, the type of the activation function adopted by the output layer of the AI model is not limited in the embodiments of the present disclosure. For example, the activation function may be a Softmax function. In some embodiments, the confidence is subject to the following constraint:

$$\sum_{j=1}^{N} v_j = 1$$

N represents N beam resources to be predicted, j represents the $j^{th}$ beam resource, $v_j$ represents the confidence of the $j^{th}$ beam resource, and $j \in (1, 2, ..., N)$. That is, the sum of various elements of the confidence vector v output by the AI model is 1.

In some embodiments, the $j^{th}$ element of the confidence vector represents the confidence of the $j^{th}$ beam resource in the N beam resources. In some embodiments, the more the $j^{th}$ element of the confidence vector is approximate to 1, the higher the confidence of the $j^{th}$ beam resource in the N beam resources; and the more the $j^{th}$ element of the confidence vector is approximate to 0, the lower the confidence of the $j^{th}$ beam resource in the N beam resources.

For example, set A includes 128 beam pairs formed from 32 transmit beams and 4 receive beams; and set B includes 32 beam pairs formed from 8 transmit beams and 4 receive beams. The input of the AI model is real vector consisting of the L1-RSRP measurement results of the 32 beam pairs in set B, and the output of the AI model is a confidence vector of length 128, denoted by v. For each element of the confidence vector v, $v_j \in (0, 1)$, and $1 \leq j \leq 128$, which represents the confidence of the $j^{th}$ beam resource being the optimal beam pair in set A, the more $v_j$ is approximate to 1, the higher the possibility that the $j^{th}$ beam resource is the optimal beam pair; and the more $v_j$ is approximate to 0, the lower the possibility that the $j^{th}$ beam resource is the optimal beam pair.

In some embodiments, the AI model is not deployed in the entity that performs the method embodiments. The entity that performs the method embodiments is a local device, and the AI model is deployed in a remote device. The remote device runs the AI model to predict the confidences of the N beam resources, selects K beam resources, and transmits the confidence information of the K beam resources to the local device. The local device obtains the confidence information of the K beam resources. The confidence information is used to indicate the confidences respectively corresponding to the K beam resources.

In some embodiments, the confidence information includes confidence indicators respectively corresponding to the K beam resources, wherein the confidence indicator corresponding to an $i^{th}$ beam resource of the K beam resources is used to indicate the confidence corresponding to the $i^{th}$ beam resource, wherein i is a positive integer less than or equal to K.

The method of representing the confidence indicator is not limited in the embodiments of the present disclosure. For example, the confidence indicator may be represented by 1 bit or 2 bits.

In some embodiments, the confidence indicator is represented by 1 bit. In some embodiments, the confidence information includes confidence indicators respectively corresponding to the K beam resources, and the confidence information is represented by K bits.

In some embodiments, in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold.

For example, the confidence indicator corresponding to the $i^{th}$ beam resource is 1, this indicates that the confidence corresponding to the $i^{th}$ beam resource is greater than or equal to 0.5; and the confidence indicator corresponding to the $i^{th}$ beam resource is 0, this indicate that the confidence corresponding to the $i^{th}$ beam resource is less than 0.5.

In some embodiments, in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

For example, the confidence indicator corresponding to the $i^{th}$ beam resource is 1, this indicates that the confidence corresponding to the $i^{th}$ beam resource is greater than 0.5; and the confidence indicator corresponding to the $i^{th}$ beam resource is 0, this indicates that the confidence corresponding to the $i^{th}$ beam resource is less than or equal to 0.5.

In some embodiments, the first threshold is related to the value of K. since the sum of the confidences of the N beam resources is 1, when the value of N is too large, the values of the confidences respectively corresponding to the N beam resources may all be approximate to 0, or the confidence of a certain beam resource is approximate to 1, and the confidences of other beam resources are approximate to 0. Therefore, it is difficult to provide a fixed threshold for selecting the K beam resources. In the embodiments of the present disclosure, the first threshold is determined based on the value of K. The specific method for determining the first threshold is not limited in the embodiments of the present disclosure.

For example, the first threshold is determined based on the first numerical value and the second numerical value, and as least one of the first numerical value or the second numerical value is related to the value of K. For example, the first numerical value is 1/K-a, the second numerical value is b, and the first threshold is determined based on 1/K-a and b, wherein a and b are constants. The values of a and b may be the same or different, which is not limited in the embodiments of the present disclosure. For example, a larger one of the first numerical value and the second numerical value is selected as the first threshold. For example, the first threshold is determined according to max {1/K-0.1, 0.1}, that is, a larger one of 1/K-0.1 and 0.1 is selected as the first threshold. For example, when K=2, the first threshold is 0.4; when K=4, the first threshold is 0.15; and when K=8, the first threshold is 0.1.

In some embodiments, the confidence indicator is represented by 2 bits. In some embodiments, the confidence information includes the confidence indicators respectively corresponding to the K beam resources, and the confidence information is represented by 2 bits.

In some embodiments, in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range;
wherein the first value range, the second value range, the third value range, and the fourth value range are different from each other.

For example, the first value range is (0, 0.25], the second value range is (0.25, 0.5], the third value range is (0.5,

**EP 4 618 651 A1**

0.75], and the fourth value range is (0.75, 1). In a case where the confidence indicator corresponding to the $i^{th}$ beam resource is 00, the confidence indicator is used to indicate that the confidence corresponding to the $i^{th}$ beam resource falls within (0, 0.25); in a case where the confidence indicator corresponding to the $i^{th}$ beam resource is 01, the confidence indicator is used to indicate that the confidence corresponding to the $i^{th}$ beam resource falls within (0.25, 0.5); in a case where the confidence indicator corresponding to the $i^{th}$ beam resource is 10, the confidence indicator is used to indicate that the confidence corresponding to the $i^{th}$ beam resource falls within (0.5, 0.75); and in a case where the confidence indicator corresponding to the $i^{th}$ beam resource is 11, the confidence indicator is used to indicate that the confidence corresponding to the $i^{th}$ beam resource falls within (0.75, 1).

The method for dividing the first value range, the second value range, the third value range, and the fourth value range is not limited in the embodiments of the present disclosure.

In some embodiments, the first value range, the second value range, the third value range, and the fourth value range are uniformly distributed. For example, the first value range is (0, 0.25], the second value range is (0.25, 0.5], the third value range is (0.5, 0.75], and the fourth value range is (0.75, 1).

In some embodiments, the first value range, the second value range, the third value range, and the fourth value range are nonuniformly distributed. For example, the first value range is (0, 0.25], the second value range is (0.25, 0.3], the third value range is (0.3, 0.7], and the fourth value range is (0.7, 1).

In the above method, the confidence in the form of a floating-point number is quantized into a binary representation understandable by the local device.

In some embodiments, the AI model is not deployed in the entity that performs the method embodiments, that is, the AI model is deployed in a remote device. This method further includes process 720, in which the local device transmits configuration information to the remote device, the configuration information including first information and/or second information, wherein the first information is used to indicate the value of K, and the second information is used to indicate a reporting mode for the confidence information.

In some embodiments, the method includes transmitting configuration information, wherein the configuration information includes first information that is used to indicate the value of K.

In some embodiments, the method includes transmitting configuration information, wherein the configuration information includes first information and second information. The first information is used to indicate the value of K, and the second information is used to indicate a reporting mode for the confidence information. The second information is also referred to as confidence indicator configuration (CIC). The remote device reports the confidence information based on the second information. The confidence information is also referred to as a confidence indicator (CI).

In some embodiments, the reporting mode for the confidence information includes: not reporting the CIC (CIC0), the CIC being represented by 1 bit (CIC1), and the CIC being represented by 2 bits (CIC2).

The relationship between the above three ways for reporting the confidence information and the value of K is illustrated in table 1.

Table 1: Corresponding relationship between the reporting mode for the confidence information and the value of K

| CIC | K=1 | K>1 |
| --- | --- | --- |
| 0 | Support | Support |
| 1 | Support | Support |
| 2 | Not support | Support |

In some embodiments, when the value of K indicated by the first information is 1, the reporting mode for the confidence information indicated by the second information does not consider CIC2. When K=1, the confidence of this beam resource is the highest one of the confidences of the N beam resources, and there is no need to quantize the confidence of this beam resource in great detail.

In some embodiments, the method includes transmitting configuration information, wherein the configuration information includes second information that is used to indicate a reporting mode for the confidence information.

In the above method, different ways for reporting the confidence information are configured for different values of K, such that the beam management is more flexible, and a better balance between beam management overheads and performance is achieved.

In addition to the spatial beam management method, the technical solutions according to the present disclosure further provide temporal beam management method. Different from the spatial beam management in which only the confidences of K beam resources in a single time unit are required, the confidences of K beam resources corresponding to each of a plurality of time units in a time domain need to be determined in the temporal beam management. The embodiments of the present disclosure provide two temporal beam management methods, which are continuous reporting and single reporting, respectively.

Continuous reporting refers to that for a plurality of time units in a time domain, the plurality of time units have respective confidence information, wherein the confidence information corresponding to a first time unit of the plurality of time units is used to indicate the confidences respectively corresnonding to the K beam resources selected in the first time unit

For example, a first time unit corresponds to first confidence information, a second time unit corresponds to second confidence information, and the first time unit is different from the second time unit. The first confidence information and the second confidence information may indicate the same or different contents, which is not limited in the embodiments of the present disclosure.

Single reporting refers to that in a case where K is 1, and for a plurality of time units in a time domain, the beam resources selected in the plurality of time units are the same and the confidences corresponding to the beam resources in the plurality of time units fall within the same quantization interval, the plurality of time units correspond to the same confidence information, wherein the confidence information is used to indicate the beam resources selected in the plurality of time units and the confidences corresponding to the beam resources.

In some embodiments, the confidence information is configured periodically. For example, in a case where the beam resources selected in the time units are the same and the confidences corresponding to the beam resources in a plurality of time units fall within the same quantization interval in a current time period, the time units in this time period correspond to the same confidence information. The length of the time period is not limited in the embodiments of the present disclosure. In some embodiments, the length of the time period may be predefined or configured by a network, which is not limited in the embodiments of the present disclosure.

For example, for five time units in a time period T, in a case where the beam resources selected in five time units are the same and the confidences corresponding to the beam resources in 5 time units fall within the same quantization interval, only one piece of same confidence information is transmitted within the time period T.

In some embodiments, corresponding confidence information is transmitted for the first time unit, and in a case where the beam resources selected in consecutive time units are the same as the beam resources selected in the first time unit, and the confidences corresponding to the beam resources in the plurality of time units fall within the same quantization interval, the confidence information is no longer transmitted, until a time unit which selects beam resources different from the first time unit appears, and/or, the confidences corresponding to the beam resources in two time units do not fall within the same quantization interval, the confidence information is retransmitted in the time unit.

For example, there exist five consecutive time units t1, t2, t3, t4 and t5, corresponding confidence information is transmitted for the first time unit t1. In a case where time units t2, t3 and t4 select the same beam resources as the first time unit t1 and the confidences corresponding to the beam resources in the 4 time units fall within the same quantization interval, confidence information corresponding to t2, t3 and t4 is no longer transmitted. In a case where time unit t5 selects beam resources different from the first time unit t1, and/or the confidences corresponding to the beam resources in the two time units do not fall within the same quantization interval, the confidence information is retransmitted in the time unit t5.

Temporal beam management is achieved by the above method.

In this technical solution according to the embodiments of the present disclosure, a target beam resource is selected from K beam resources based on the confidences respectively corresponding to the K beam resources. In this confidence-based beam management, the reliability of beam resources is evaluated based on confidences during selection of the target beam resource, and thus more reliable target beam resources are acquired for data services, such that better spatial and temporal beam management is achieved.

In some embodiments, the AI model is deployed in a terminal device, and a network device performs the above method for beam management to select a target beam resource.

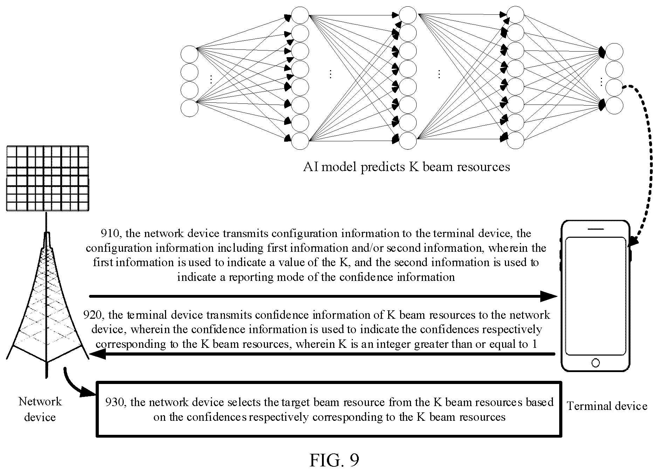

FIG. 9 is a schematic diagram of a method for beam management according to some embodiments of the present disclosure. This method is applicable to the network architecture illustrated in FIG. 1, and this method include at least one of the following processes 910 to 930.

In process 910, the network device transmits configuration information to the terminal device, the configuration information including first information and/or second information, wherein the first information is used to indicate a value of the K, and the second information is used to indicate a reporting mode for the confidence information.

In some embodiments, signaling carrying the configuration information includes at least one of radio resource control (RRC) signaling, MAC control element (MAC CE) signaling, or DCI signaling.

In process 920, the terminal device transmits confidence information of K beam resources to the network device, wherein the confidence information is used to indicate the confidences respectively corresponding to the K beam resources, wherein K is an integer greater than or equal to 1.

The terminal device runs the AI model to predict the confidences of N beam resources based on M beam resources, selects K beam resources using a multiplexer, and reports the K beam resources and corresponding confidences thereof to the network device.

In some embodiments, the terminal device carries the confidence information of the K beam resources over the UCI signaling.

In some embodiments, the UCI signaling includes a Confidence Indicator field, which is used to carry confidence information.

In some embodiments, when K=1, the Confidence Indicator field occupies 1 bit, and is used to carry the confidence indicator corresponding to the beam resource.

In some embodiments, when K>1, in a case where the second information contained in the configuration information transmitted by the network device to the terminal device is used to indicate that the reporting mode for the confidence information is CIC1, the Confidence Indicator field occupies K bits, where the $k^{th}$ bit is used to carry the confidence indicator corresponding to the $k^{th}$ beam resource.

In some embodiments, when K>1, in a case where the second information contained in the configuration information transmitted by the network device to the terminal device is used to indicate that the reporting mode for the confidence information is CIC2, the Confidence Indicator field occupies 2K bits, where the $[2(k-1), 2k]^{th}$ bit is used to carry the confidence indicator corresponding to the $k^{th}$ beam resource.

In process 930, the network device selects the target beam resource from the K beam resources based on the confidences respectively corresponding to the K beam resources.

In some embodiments, K=1, and the second information contained in the configuration information transmitted by the network device to the terminal device is used to indicate that the reporting mode for the confidence information is CIC1. That is, the terminal device determines 1 beam resource based on the AI model, and reports the beam resource and the confidence corresponding to the beam resource to the network device. In a case where the confidence indicator is a first value, the network device directly determines the beam resource as the target beam resource; and in a case where the confidence indicator is a second value, the network device acquires the beam quality information corresponding to the beam resource by performing beam quality verification on the beam resource, and selects the target beam resource based on the beam quality information.

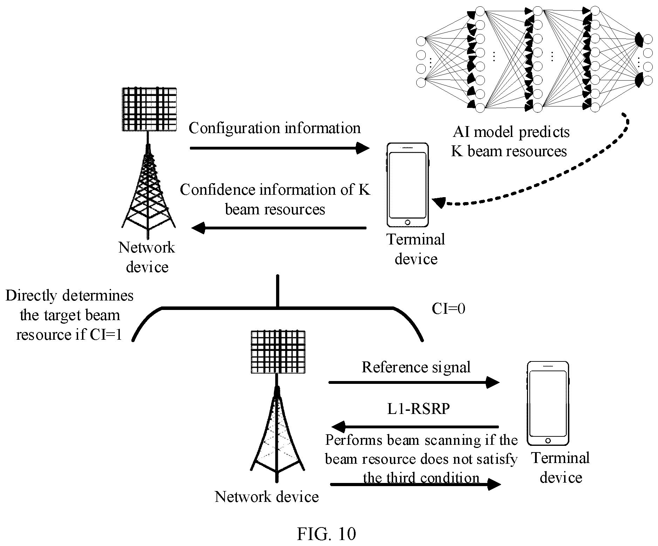

For example, K=1, and the second information contained in the configuration information transmitted by the network device to the terminal device is used to indicate that the reporting mode for the confidence information is CIC1. That is, the terminal device determines 1 beam resource based on the AI model, and reports the beam resource and the confidence corresponding to the beam resource to the network device. For example, in a case where the CI=1, it represents that the confidence of the beam resource is greater than a first threshold; and in a case where the CI=0, it represents that the confidence of the beam resource is less than a second threshold. As illustrated in FIG. 10, in a case where the CI=1, the network device directly determines the beam resource as the target beam resource. In a case where the CI=0, the network device transmits a reference signal to the terminal device based on the beam resource, and the terminal device measures the L1-RSRP of the beam resource and reports the L1-RSRP to the network device. In a case where L1-RSRP of the beam resource satisfies a third condition, the beam resource is determined as the target beam resource. For example, in a case where the L1-RSRP of the beam resource is greater than a first threshold, the beam resource is determined as the target beam resource. In a case where L1-RSRP of the beam resource does not satisfy the third condition, beam quality verification is performed on N beam resources, and the target beam resource is determined from the N beam resources based on the beam quality information.

In some embodiments, the network device determines the target beam resource based on the third condition, and transmits the index of the target beam resource to the terminal device.

In some embodiments, the terminal device determines the target beam resource based on the third condition. Therefore, the network device and the terminal device are consistent with each other in determining the target beam resource, and the network device does not need to transmits the index of the target beam resource to the terminal device after the network device determines the target beam resource.

In some embodiments, K>1, and the second information contained in the configuration information transmitted by the network device to the terminal device is used to indicate that the reporting mode for the confidence information is CIC1. In a case where the K beam resources include both beam resources of which the confidence indicators are the first value and beam resources of which the confidence indicators are the second value, the network device randomly selects a beam resource from the beam resources of which the confidence indicators are the first value, and determines the beam resource as the target beam resource.

For example, K=6, and the second information contained in the configuration information transmitted by the network device to the terminal device is used to indicate that the reporting mode for the confidence information is CIC1. In a case where the CIs of two beam resources (N1 and N2) are both 1, and the CIs of the other four beam resources (N3, N4, N5, and N6) are all 0, the network device randomly selects a beam resource from the beam resources (N1 and N2) of which the CIs are both 1, and determines the beam resource as the target beam resource.

According to the above method, a beam resource is randomly selected as the target beam resource based on the confidences, and there is no need to perform beam quality verification, which reduces the resource overheads required by the reference signal and alleviates the delay in determining the target beam resource.

In some embodiments, K>1, and the second information contained in the configuration information transmitted by the network device to the terminal device is used to indicate that the reporting mode for the confidence information is CIC1. In a case where the K beam resources include both beam resources of which the confidence indicators are the first value and beam resources of which the confidence indicators are the second value, the network device acquires beam quality information by performing the beam quality verification on the beam resources of which the confidence indicators are the first value, and determines the target beam resource based on the beam quality information.

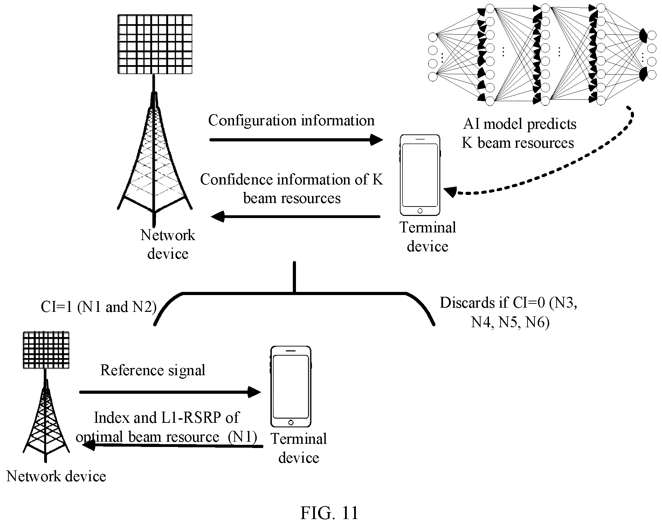

For example, K=6, and the second information contained in the configuration information transmitted by the network device to the terminal device is used to indicate that the reporting mode for the confidence information is CIC1. In a case where the CIs of 2 beam resources (N1 and N2) are 1, and the CIs of the other four beam resources (N3, N4, N5, and N6) are all 0, as illustrated in FIG. 11, the network device transmits a reference signal to the terminal device based on the two beam resources (N1 and N2) of which the CIs are both 1, the terminal device measures the L1-RSRPs of the two beam resources and reports the beam resource with an optimal L1-RSRP (e.g., N1) in the two beam resources to the network device, and the network device determines the beam resource (e.g., N1) as the target beam resource.

According to the above method, an additional beam quality verification process is utilized to acquire the optimal beam resource for data service, which ensures the data service quality.

In some embodiments, K>1, and the second information contained in the configuration information transmitted by the network device to the terminal device is used to indicate that the reporting mode for the confidence information is CIC2. In this case, there may be a plurality of combinations of confidence indicators respectively corresponding to the K beam resources (CI=11 (the first value range), CI=10 (the second value range), CI=01 (the third value range), and CI=00 (the fourth value range)). In a case where the first value range, the second value range, the third value range, and the fourth value range are uniformly distributed, i.e., CI=11 represents the confidence falls within (0.75, 1), CI=10 represents the confidence falls within (0.5, 0.75], CI=01 represents the confidence falls within (0.25, 0.5], and CI=00 represents the confidence falls within (0, 0.25], since the sum of the confidences of the N beam resources is equal to 1, the sum of the confidences of the K beam resources is less than 1. Therefore, in a case where one beam resource (e.g., N1) with CI=11 is present in the K beam resources, the CIs of the other (K-1) beam resources are all 01 or 00, the network device determines the beam resource (e.g., N1) of which the CI is 11 as the target beam resource. In a case where one beam resource (e.g., N2) with CI=10 is present in the K beam resources, the CIs of the other (K-1) beam resources are all 01 or 00, the network device determines the beam resource (e.g., N2) of which the CI is 10 as the target beam resource.

In some embodiments, K>1, and the second information contained in the configuration information transmitted by the network device to the terminal device is used to indicate that the reporting mode for the confidence information is CIC2. In a case where the K beam resources only include beam resources of which the CIs are all 01 and beam resources of which the CIs are all 00, the network device acquires beam quality information by performing the beam quality verification on the beam resources of which the CIs are 01, and determines the target beam resource based on the beam quality information. In a case where the K beam resources only include beam resources of which the CIs are all 00, the network device performs the beam quality verification on the N beam resources, and determines the target beam resource based on the beam quality information.

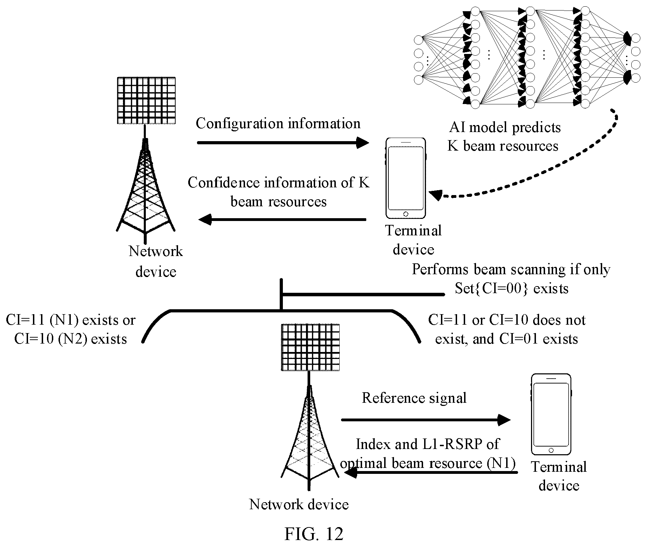

For example, K>1, and the second information contained in the configuration information transmitted by the network device to the terminal device is used to indicate that the reporting mode for the confidence information is CIC2. As illustrated in FIG. 12, in a case where one beam resource (e.g., N1) with CI=11 is present in the K beam resources, the CIs of the other (K-1) beam resources are 01 or 00, the network device determines the beam resource (e.g., N1) of which the CI is 11 as the target beam resource. In a case where one beam resource (e.g., N2) with CI=10 is present in the K beam resources, the CIs of the other (K-1) beam resources are 01 or 00, the network device determines the beam resource (e.g., N2) of which the CI is 10 as the target beam resource. In a case where the K beam resources only include beam resources of which the CIs are all 01 and beam resources of which the CIs are all 00, the network device acquires beam quality information by performing the beam quality verification on the beam resources of which the CIs are 01, and determines the target beam resource based on the beam quality information. In a case where the K beam resources only include beam resources of which the CIs are all 00, the network device performs the beam quality verification on the N beam resources, and determines the target beam resource based on the beam quality information (which is also referred to as beam resource scanning).

In this technical solution according to the embodiments of the present disclosure, K beam resources are output by the AI model deployed at the terminal device side, and the K beam resources and their corresponding confidences are reported to the network device to assist the network device in determining the target beam resource. In this way, the network device is capable of evaluating whether the beam resources are reliable or not based on the confidences, and is capable of reducing beam measurement overheads when the confidences are high and falling back to the beam resource scanning process when the confidences are low, such that the selection quality of beam resources is ensured.

In some embodiments, the AI model is deployed in a network device, and the network device performs the above method for beam management to select a target beam resource.

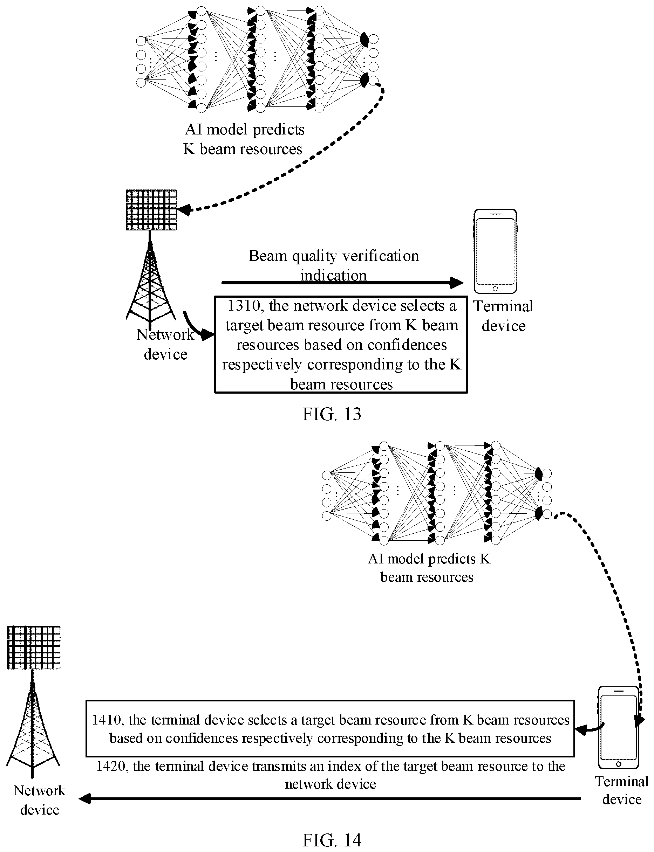

FIG. 13 is a schematic diagram of a method for beam management according to some embodiments of the present disclosure. This method is applicable to the network device and includes the following process 1310.

In process 1310, the network device selects a target beam resource from K beam resources based on confidences respectively corresponding to the K beam resources.

Prior to process 1310, the network device runs the AI model to predict the confidences of N beam resources based on M beam resources, and selects K beam resources using a multiplexer.

In some embodiments, the AI model is deployed in the network device, and the network device directly acquires K beam resources and corresponding confidences thereof, and the confidences are floating-point numbers between 0 and 1 that have not been quantized. In this case, neither the confidences need to be quantized and reported nor the terminal device needs to be informed of the confidences, and the network device achieves beam management based on different values of K and different confidence configurations.

In some embodiments, since the AI model is deployed in the network device, the terminal device is incapable of acquiring the information of the target beam resource. Therefore, after determining the target beam resource, the network device needs to indicate the target beam resource to the terminal device. For example, the network device transmits the index of the target beam resource to the terminal device.

For example, the target beam resource is a beam pair consisting of a transmit beam and a receive beam, and the network device transmits the index of the receive beam to the terminal device.

In some embodiments, in a case where beam quality verification needs to be performed on a specific beam resource, the network device transmits a beam quality verification indication to the terminal device to indicate the terminal device to perform the beam quality verification, receives beam quality information reported by the terminal device, and determines the target beam resource based on the beam quality information.

The beam quality information includes corresponding relationship between beam qualities and corresponding beam resources. For example, the beam quality information includes indexes of beam resources and corresponding beam qualities. For example, the beam quality information includes beam qualities arranged in a sequential order, and the sequential order is used to indicate the corresponding relationship between the beam qualities and beam resources.

In some embodiments, in a case where beam quality verification needs to be performed on a specific beam resource, the network device transmits a beam quality verification indication to the terminal device to indicate the terminal device to perform the beam quality verification, receives an index of a beam resource with optimal beam quality reported by the terminal device, and determines the beam resource with optimal beam quality as the target beam resource.

In some embodiments, for a plurality of time units in a time domain, the network device acquires the K beam resources respectively corresponding to the plurality of time units and performs the above method for beam management for the K beam resources corresponding to each time unit.

In this technical solution according to the embodiments of the present disclosure, the target beam resource is determined based on confidences, and beam management is achieved on the network device, without the need of reporting by the terminal device, which reduces signaling processes and alleviates delay. In addition, the system reduces beam measurement overheads when the confidences are high and scans the beam resources when the confidences are low, such that the access quality of beam resource is ensured.

In some embodiments, the AI model is deployed in a terminal device, and the terminal device performs the above method for beam management to select a target beam resource.

FIG. 14 is a schematic diagram of a method for beam management according to some embodiments of the present disclosure. This method is applicable to the network architecture illustrated in FIG. 1, and the method includes at least one of the following processes 1410 and 1420.

In process 1410, the terminal device selects a target beam resource from K beam resources based on confidences respectively corresponding to the K beam resources.

The terminal device runs the AI model to predict the confidences of N beam resources based on M beam resources, and selects K beam resources using a multiplexer.

In some embodiments, prior to process 1410, the method further includes: transmitting, by a network device, configuration information to the terminal device, wherein the configuration information includes first information which is used to indicate the value of K.

In process 1420, the terminal device transmits an index of the target beam resource to the network device.

In some embodiments, the AI model is deployed in the terminal device, and the terminal device directly acquires K beam resources and corresponding confidences thereof, and the confidences are floating-point numbers between 0 and 1 that have not been quantized. In this case, the confidences do not need to be quantized and reported, and the terminal device achieves beam management locally based on different values of K and different confidence configurations.

In some embodiments, in a case where the confidence of a beam resource in the K beam resources is high, the terminal device determines the beam resource as the target beam resource and report the target beam resource to the network device.

For example, K=1, and the second information contained in the configuration information transmitted by the network device to the terminal device is used to indicate that the reporting mode for the confidence information is CIC1, that is, the terminal device runs the AI model to determine 1 beam resource. In a case where the CI corresponding to the beam resource is 1, the terminal device determines the beam resource as the target beam resource. CI=1 represents that the confidence is greater than a first threshold.

For example, K>1, and the second information contained in the configuration information transmitted by the network device to the terminal device is used to indicate that the reporting mode for the confidence information is CIC1. In a case where only one beam resource with CI=1 is present in the K beam resources, the terminal device determines the beam resource of which the CI is 1 as the target beam resource. CI=1 represents that the confidence is greater than the first threshold.

For example, K>1, and the second information contained in the configuration information transmitted by the network device to the terminal device is used to indicate that the reporting mode for the confidence information is CIC2. In a case where a beam resource with CI =11 is present in the K beam resources, the terminal device determines the beam resource of which the CI is 11 as the target beam resource. CI=11 represents that the confidence falls within a first value range, and CI=10 represents that the confidence falls within a second value range.

For example, K>1, and the second information contained in the configuration information transmitted by the network device to the terminal device is used to indicate that the reporting mode for the confidence information is CIC2. In a case where a beam resource with CI =10 is present in the K beam resources, the terminal device determines the beam resource of which the CI is 10 as the target beam resource. CI=11 represents that the confidence falls within a first value range, and CI=10 represents that the confidence falls within a second value range.

In some embodiments, in a case where beam quality verification needs to be performed on a beam resource, the terminal device needs to transmit a beam quality verification request to the network device. The network device configures a reference signal used for beam quality verification, acquires beam quality information by performing beam quality measurement on the reference signal, and determines the target beam resource based on the beam quality information. The beam quality verification request is used to the network device to configure the reference signal used for beam quality verification. In some embodiments, the beam quality verification request carries an index of a beam resource on which the beam quality verification is to be performed.

For example, K=1, and the second information contained in the configuration information transmitted by the network device to the terminal device is used to indicate that the reporting mode for the confidence information is CIC1. In this case, the CI corresponding to the beam resource is the second value, and the terminal device transmits a beam quality verification request to the network device to request the network device to transmit, based on the beam resource, a reference signal used for beam quality verification.

For example, K>1, and the second information contained in the configuration information transmitted by the network device to the terminal device is used to indicate that the reporting mode for the confidence information is CIC1. In a case where a plurality of beam resources of which the CIs are all 1 are present in the K beam resources, the terminal device transmits a beam quality verification request to the network device to request the network device to transmit, based on the plurality of beam resources of which the CIs are all 1, a reference signal used for beam quality verification.

For example, K>1, and the second information contained in the configuration information transmitted by the network device to the terminal device is used to indicate that the reporting mode for the confidence information is CIC2. In a case where K beam resources only include beam resources of which the CIs are all 01 and beam resources of which the CIs are all 00, the terminal device transmits a beam quality verification request to the network device to request the network device to transmit, based on the beam resources of which the CIs are all 01, a reference signal used for beam quality verification.

In some embodiments, for a plurality of time units in a time domain, the terminal device obtains the K beam resources respectively corresponding to the plurality of time units, and performs the above method for beam management for the K beam resources corresponding to each time unit.

In this technical solution according to the embodiments of the present disclosure, the target beam resource is determined based on confidences, and beam management is locally achieved on the terminal device. In the beam management, a beam quality verification request may be triggered, the beam measurement overheads are reduced when the confidences are high and it falls back to the beam scanning process when the confidences are low, such that the access quality of beam resources is ensured.

In a case where the AI model is deployed at the network device side, the network device may directly obtain the K beam resources and corresponding confidences thereof. In addition, since the AI model deployed at the network device side is generally shared by all terminal devices in a cell, the beam management achieved directly by the network device has lower complexity, and it does not require additional signaling to inform the terminal devices of the confidences. Therefore, this technical solution according to the embodiments of the present disclosure does not support the implementation method of deploying the AI model at the network device side and performing, by the terminal device, the above method for beam management to determine the target beam resource.

It should be noted that the above embodiments are described only from the perspective of interaction between the terminal device and the network device, and the above processes performed by the terminal device may be separately implemented as a method for beam management on the terminal device side; and the above processes performed by the network device may be separately implemented as a method for beam management on the network device side.

The following is apparatus embodiments of the present disclosure, which may be applicable to performing the method embodiments. For details not disclosed in the apparatus embodiments, reference may be made to the method embodiments of the present disclosure.

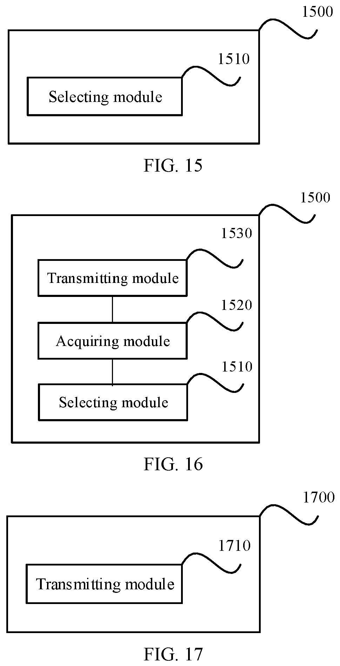

FIG. 15 is a block diagram of an apparatus for beam management according to some embodiments of the present disclosure. The apparatus has the functions of implementing the above examples of the methods for beam management, and all functions may be implemented by hardware or implemented by software executed by hardware. The apparatus may be the communication device described above or be disposed in the communication device. The communication device may be a terminal device or a network device. As illustrated in FIG. 15, the apparatus 1500 includes a selecting module 1510.

The selecting module 1510 is configured to select a target beam resource from K beam resources based on confidences respectively corresponding to the K beam resources, wherein K is an integer greater than or equal to 1.

In some embodiments, the selecting module 1510 is configured to determine a beam resource with a confidence that satisfies a first condition in the K beam resources as the target beam resource.

In some embodiments, the first condition includes at least one of:

the confidence being the highest;
the confidence being greater than or equal to a first threshold; or
the confidence falling within a first value range.

In some embodiments, as illustrated in FIG. 16, the selecting module 1510 is configured to: select at least one candidate beam resource from the K beam resources based on the confidences respectively corresponding to the K beam resources; acquire beam quality information respectively corresponding to the at least one candidate beam resource by performing a beam quality verification on the at least one candidate beam resource; and select the target beam resource based on the beam quality information respectively corresponding to the at least one candidate beam resource.

In some embodiments, the selecting module 1510 is configured to determine a beam resource with a confidence that satisfies a second condition in the K beam resources as the candidate beam resource; wherein the second condition includes at least one of:

the confidence being less than or equal to a second threshold;
the confidence not falling within a first value range; or
the confidence falling within a second value range.

In some embodiments, as illustrated in FIG. 16, the apparatus 1500 further includes an acquiring module 1520.

The acquiring module 1520 is configured to acquire confidences respectively corresponding to N beam resources acquired by an AI model, wherein N is an integer greater than 1.

The selecting module 1510 is further configured to select the K beam resources from the N beam resources based on the confidences respectively corresponding to the N beam resources.

In some embodiments, the acquiring module 1520 is configured to acquire confidence information of the K beam resources, wherein the confidence information is used to indicate the confidences respectively corresponding to the K beam resources.

In some embodiments, the confidence information includes confidence indicators respectively corresponding to the K beam resources, wherein the confidence indicator corresponding to an $i^{th}$ beam resource of the K beam resources is used to indicate the confidence corresponding to the $i^{th}$ beam resource, where i is a positive integer less than or equal to K.

In some embodiments, the confidence indicator is represented by 1 bit; and

in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

In some embodiments, the first threshold is related to the value of K.

In some embodiments, the confidence indicator is represented by 2 bits; and

in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range.

The first value range, the second value range, the third value range, and the fourth value range are different from each other.

In some embodiments, as illustrated in FIG. 16, the apparatus 1500 further includes a transmitting module 1530.

The transmitting module 1530 is configured to transmit configuration information including first information and/or second information, wherein the first information is used to indicate the value of K, and the second information is used to indicate a reporting mode for the confidence information.

In some embodiments, for a plurality of time units in a time domain, the plurality of time units have respective confidence information, wherein confidence information corresponding to a first time unit of the plurality of time units is used to indicate the confidences respectively corresponding to the K beam resources selected in the first time unit.

In some embodiments, in a case where K is 1, and for a plurality of time units in a time domain, beam resources selected in the plurality of time units are the same and confidences corresponding to the beam resources in the plurality of time units fall within the same quantization interval, the plurality of time units correspond to the same confidence information, wherein the confidence information is used to indicate the beam resources selected in the plurality of time units and the confidences corresponding to the beam resources.

In this technical solution according to the embodiments of the present disclosure, a target beam resource is selected from K beam resources based on the confidences respectively corresponding to the K beam resources. In this confidence-based beam management, the reliability of beam resources is evaluated based on confidences during selection of the target beam resource, and thus more reliable target beam resources are acquired for data services, such that better spatial and temporal beam management is achieved.

FIG. 17 is a block diagram of an apparatus for beam management according to some embodiments of the present disclosure. The apparatus has the functions of implementing the above examples of the methods for beam management, and all functions may be implemented by hardware or implemented by software executed by hardware. The apparatus may be the terminal device described above or be disposed in the terminal device. As illustrated in FIG. 17, the apparatus 1700 includes a transmitting module 1710.

The transmitting module 1710 is configured to transmit confidence information of K beam resources to a network device, wherein the confidence information is used to indicate confidences respectively corresponding to the K beam resources, and K is an integer greater than or equal to 1.

In some embodiments, the confidence information includes confidence indicators respectively corresponding to the K beam resources, wherein the confidence indicator corresponding to an $i^{th}$ beam resource of the K beam resources is used to indicate the confidence corresponding to the $i^{th}$ beam resource, where i is a positive integer less than or equal to K.

In some embodiments, the confidence indicator is represented by 1 bit; and

in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

In some embodiments, the first threshold is related to the value of K.

In some embodiments, the confidence indicator is represented by 2 bits; and

in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or

in a case where the confidence indicator corresponding to the $i^{th}$ beam resource is 10, the confidence indicator is used to indicate that the confidence corresponding to the $i^{th}$ beam resource falls within a third value range; or

in a case where the confidence indicator corresponding to the $i^{th}$ beam resource is 11, the confidence indicator is used to indicate that the confidence corresponding to the $i^{th}$ beam resource falls within a fourth value range.

The first value range, the second value range, the third value range, and the fourth value range are different from each other.

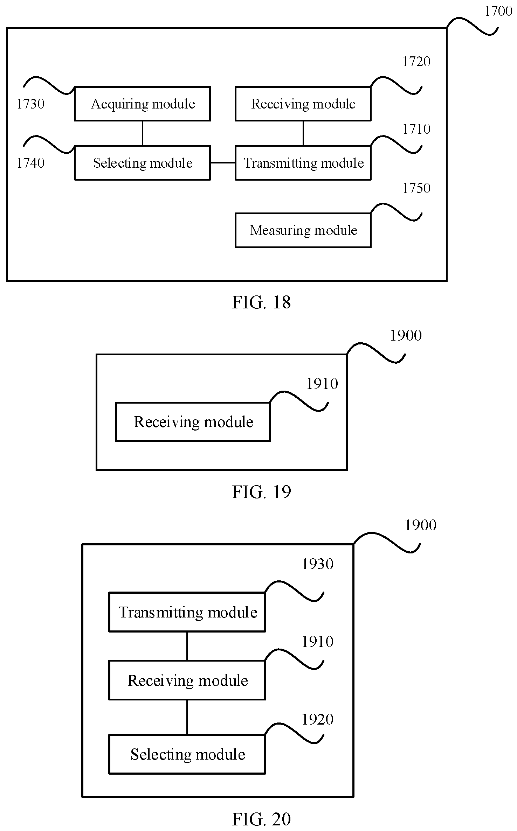

In some embodiments, as illustrated in FIG. 18, the apparatus 1700 further includes a receiving module 1720.

The receiving module 1720 is configured to receive configuration information transmitted by the network device, the configuration information includes first information and/or second information, wherein the first information is used to indicate a value of the K, and the second information is used to indicate a reporting mode for the confidence information.

In some embodiments, as illustrated in FIG. 18, the apparatus 1700 further includes an acquiring module 1730 and a selecting module 1740.

The acquiring module 1730 is configured to acquire confidences respectively corresponding to N beam resources obtained by an AI model, where N is an integer greater than 1.

The selecting module 1740 is configured to select the K beam resources from the N beam resources based on the confidences respectively corresponding to the N beam resources.

In some embodiments, as illustrated in FIG. 18, the apparatus 1700 further includes measuring module 1750.

The receiving module 1720 is further configured to receive a reference signal respectively transmitted by the network device over at least one candidate beam resource, wherein the at least one candidate beam resource is selected from the K beam resources.

The measuring module 1750 is configured to acquire beam quality information respectively corresponding to all candidate beam resources by measuring the reference signal transmitted over all candidate beam resources.

The transmitting module 1710 is further configured to transmit the beam quality information respectively corresponding to all candidate beam resources to the network device.

In some embodiments, for a plurality of time units in a time domain, the plurality of time units have respective confidence information, wherein the confidence information corresponding to a first time unit of the plurality of time units is used to indicate the confidences respectively corresponding to the K beam resources selected in the first time unit.

In some embodiments, in a case where K is 1, for a plurality of time units in a time domain, beam resources selected in the plurality of time units are the same and the confidences corresponding to the beam resources in the plurality of time units fall within the same quantization interval, the plurality of time units correspond to the same confidence information, wherein the confidence information is used to indicate the beam resources selected in the plurality of time units and the confidences corresponding to the beam resources.

In this technical solution according to the embodiments of the present disclosure, a target beam resource is selected from K beam resources based on the confidences respectively corresponding to the K beam resources. In this confidence-based beam management, the reliability of beam resources is evaluated based on confidences during selection of the target beam resource, and thus more reliable target beam resources are acquired for data services, such that better spatial and temporal beam management is achieved.

FIG. 19 is a block diagram of an apparatus for beam management according to some embodiments of the present disclosure. The apparatus has the functions of implementing the above examples of the methods for beam management, and all functions may be implemented by hardware or implemented by software executed by hardware. The apparatus may be the network device described above or be disposed in the network device. As illustrated in FIG. 19, the apparatus 1900 includes a receiving module 1910.

The receiving module 1910 is configured to receive confidence information of K beam resources transmitted by a terminal device, wherein the confidence information is used to indicate confidences respectively corresponding to the K beam resources, and K is an integer greater than or equal to 1.

In some embodiments, as illustrated in FIG. 20, the apparatus 1900 further includes a selecting module 1920.

The selecting module 1920 is configured to select a target beam resource from the K beam resources based on the confidences respectively corresponding to the K beam resources.

In some embodiments, the selecting module 1920 is configured to determine a beam resource with a confidence that satisfies a first condition in the K beam resources as the target beam resource.

In some embodiments, the first condition includes at least one of:

the confidence being the highest;

the confidence being greater than or equal to a first threshold; or

the confidence falling within a first value range.

In some embodiments, as illustrated in FIG. 20, the selecting module 1920 is configured to: select at least one candidate beam resource from the K beam resources based on the confidences respectively corresponding to the K beam resources; acquire beam quality information respectively corresponding to all candidate beam resources by performing a beam quality verification on all candidate beam resources; and select the target beam resource based on the beam quality information respectively corresponding to all candidate beam resources.

In some embodiments, the selecting module 1920 is configured to determine a beam resource with a confidence that satisfies a second condition in the K beam resources as the candidate beam resource; wherein the second condition includes at least one of:

the confidence being less than or equal to a second threshold;
the confidence not falling within a first value range; or
the confidence falling within a second value range.

In some embodiments, the confidence information includes confidence indicators respectively corresponding to the K beam resources, wherein the confidence indicator corresponding to an $i^{th}$ beam resource of the K beam resources is used to indicate the confidence corresponding to the $i^{th}$ beam resource, i being a positive integer less than or equal to K.

In some embodiments, the confidence indicator is represented by 1 bit; and

in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or

in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

In some embodiments, the first threshold is related to the value of K.

In some embodiments, the confidence indicator is represented by 2 bits; and

in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range.

The first value range, the second value range, the third value range, and the fourth value range are different from each other.

In some embodiments, as illustrated in FIG. 20, the apparatus 1900 further includes a transmitting module 1930.

The transmitting module 1930 is configured to transmit configuration information to the terminal device, and the configuration information includes first information and/or second information, wherein the first information is used to indicate the value of K, and the second information is used to indicate a reporting mode for the confidence information.

In some embodiments, for a plurality of time units in a time domain, the plurality of time units have respective confidence information, wherein confidence information corresponding to a first time unit of the plurality of time units is used to indicate the confidences respectively corresponding to the K beam resources selected in the first time unit.

In some embodiments, in a case where K is 1, and for a plurality of time units in a time domain, beam resources selected in the plurality of time units are the same and the confidences corresponding to the beam resources in the plurality of time units fall within the same quantization interval, the plurality of time units correspond to the same confidence information, wherein the confidence information is used to indicate the beam resources selected in the plurality of time units and the confidences corresponding to the beam resources.

In this technical solution according to the embodiments of the present disclosure, a target beam resource is selected from K beam resources based on the confidences respectively corresponding to the K beam resources. In this confidence-based beam management, the reliability of beam resources is evaluated based on confidences during selection of the target beam resource, and thus more reliable target beam resources are acquired for data services, such that better spatial and temporal beam management is achieved.

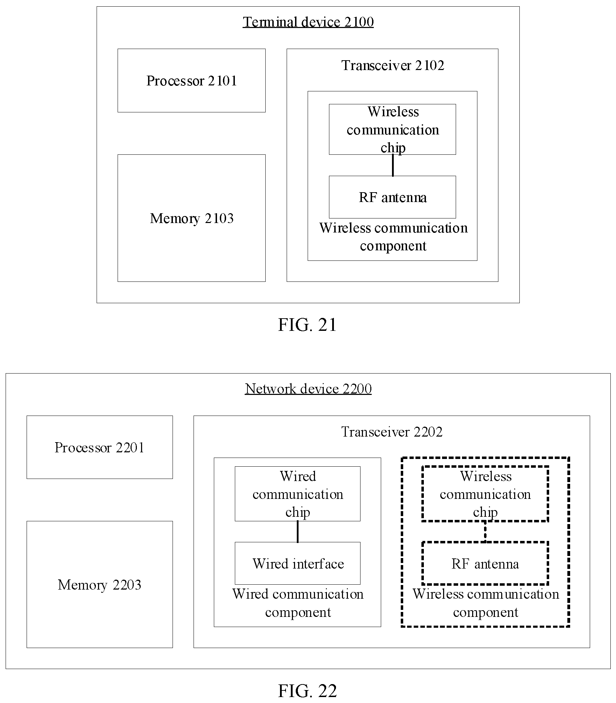

FIG. 21 is a schematic structural diagram of a terminal device according to some embodiments of the present disclosure. The terminal device 2100 includes a processor 2101, a transceiver 2102, and a memory 2103. The processor 2101 is configured to implement the functions of the above selecting module 1510 and/or selecting module 1740, and the transceiver 2102 is configured to implement the functions of the above transmitting module 1710 and/or receiving module 1720.

The processor 2101 includes one or more processing cores. The processor 2101 runs various functional applications and performs information processing by running one or more software programs and modules. The processor 2101 is configured to perform processes performed by the terminal device other than the transmitting processes and receiving processes in the above method embodiments.

The transceiver 2102 includes a receiver and a transmitter. For example, the receiver and the transmitter may be implemented as a wireless communication component. The wireless communication component may include a wireless communication chip and a radio frequency (RF) antenna. The transceiver 2102 is configured to perform the transmitting processes and/or receiving processes performed by the terminal device in the above method embodiments.

The memory 2103 may be connected to the processor 2101 and the transceiver 2102.

The memory 2103 may be configured to store at least one computer program run by a processor. The processor 2101 is configured to load and run the at least one computer program to perform the processes in the above method embodiments.

In addition, the memory may be practiced by any type of volatile or non-volatile storage device or a combination thereof. The volatile or non-volatile storage device includes but is not limited to: a magnetic disk or an optical disc, an electrically erasable programmable read-only memory (EEPROM), an erasable programmable read-only memory (EPROM), a static random-access memory (SRAM), a read-only memory (ROM), a magnetic memory, a flash memory, and a programmable ROM (PROM).

In some embodiments, the processor 2101 is configured to select a target beam resource from K beam resources based on confidences respectively corresponding to the K beam resources, wherein K is an integer greater than or equal to 1.

In some embodiments, the processor 2101 is configured to transmit confidence information of K beam resources to a network device, wherein the confidence information is used to indicate confidences respectively corresponding to the K beam resources, wherein K is an integer greater than or equal to 1.

For details not described in the present embodiment, reference may be made to the above embodiments, which are not described herein any further.

FIG. 22 is a schematic structural diagram of a network device according to some embodiments of the present disclosure. The network device 2200 is configured to perform the processes performed by the network device in the above embodiments. The network device 2200 includes a processor 2201, a transceiver 2202, and a memory 2203. The processor 2201 is configured to implement the functions of the above selecting module 1510 and/or selecting module 1920, and the transceiver 2202 is configured to implement the functions of the above transmitting module 1530 and/or receiving module 1910.

The processor 2201 includes one or more processing cores. The processor 2201 runs various functional applications and performs information processing by running one or more software programs and modules. The processor 2201 is configured to perform processes performed by the network device other than the receiving processes and transmitting processes in the above method embodiments.

The transceiver 2202 includes a receiver and a transmitter. For example, the transceiver 2202 may include a wired communication component, and the wired communication component may include a wired communication chip and a wired interface (e.g., a fiber interface). In some embodiments, the transceiver 2202 may also include a wireless communication component, and the wireless communication component may include a wireless communication chip and an RF antenna. The transceiver 2202 is configured to perform the transmitting processes and/or receiving processes performed by the network device in the above method embodiments.

The memory 2203 may be connected to the processor 2201 and the transceiver 2202.

The memory 2203 may be configured to store at least one computer program run by a processor. The processor 2201 is configured to load and run the at least one computer program to perform the processes performed by the network device in the above method embodiments.

In addition, the memory 2203 may be practiced by any type of volatile or non-volatile storage device or a combination thereof. The volatile or non-volatile storage device includes but is not limited to: a magnetic disk or an optical disc, an EEPROM, an EPROM, a SRAM, a ROM, a magnetic memory, a flash memory, or a PROM.

In some embodiments, the transceiver 802 is configured to receive confidence information of K beam resources from a terminal device, and the confidence information is used to indicate confidences respectively corresponding to the K beam resources, wherein K is an integer greater than or equal to 1.

## EP 4 618 651 A1

For details not described in the present embodiment, reference may be made to the above embodiments, which are not described herein any further.

Some embodiments of the present disclosure further provide a computer-readable storage medium. The computer-readable storage medium stores one or more computer programs, and the computer programs, when loaded and run by a processor, causes the processor to perform the above method for beam management. In some embodiments, the computer-readable storage medium may include a ROM, a random-access memory (RAM), a solid-state drive (SSD), an optical disk, or the like. The RAM may include a resistance random access memory (ReRAM) and a dynamic random-access memory (DRAM).

Some embodiments of the present disclosure further provide a chip. The chip includes a programmable logic circuit and/or one or more program instructions. The chip, when running, is caused to perform the above method for beam management.

Some embodiments of the present disclosure further provide a computer program product. The computer program product includes one or more computer instructions stored in a computer-readable storage medium. The one or more computer instructions, when read from the computer-readable storage medium and executed by a processor, cause the processor to perform the above method for beam management.

It is to be understood that "indication" mentioned in the embodiments of the present disclosure may be a direct indication, an indirect indication, or an indication that an association relationship is present. For example, "A indicates B" may mean that A directly indicates B, for example, B may be obtained from A; or may mean that A indirectly indicates B, for example, A indicates C through which B may be obtained; or may mean an association relationship is present between A and B.

In the description of the embodiments of the present disclosure, the term "corresponding" indicates a direct or indirect corresponding relationship between two items, or an association relationship between the two items, or a relationship such as indicating and being indicated, configuring and being configured, or the like.

In some embodiments of the present disclosure, the term "predefinition" may be implemented by pre-storing a corresponding code, a corresponding table, or another method that may be used to indicate relevant information in a device (such as a terminal device and a network device), and the specific implementation thereof is not limited in the present disclosure. For example, the term "predefined" may be "defined" in a protocol.

In some embodiments of the present disclosure, the term "protocol" may be a standard protocol in the field of communication, and for example, may include an LTE protocol, an NR protocol, and a related protocol applicable to a future communication system, which is not limited in the present disclosure.

The expression "a plurality of" herein refers to two or more. The term "and/or" herein describes an association relationship between associated objects, indicating three types of relationships. For example, the phrase "A and/or B" means (A), (B), or (A and B). The character "/" herein generally represents an "or" relationship between the associated objects.

The expression "greater than or equal to" herein means greater than or equal to or just greater than, and the expression "less than or equal to" herein means less than or equal to or just less than.

In addition, the serial numbers of the processes described herein only exemplifies one possible execution sequence among the processes. In some embodiments, the processes may also be executed without following the numbered order. For example, two processes with different numbers are executed simultaneously or in an order reverse to the order illustrated in the figures, which is not limited in the embodiments of the present disclosure.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely exemplary embodiments of the present disclosure and are not intended to limit the present disclosure. Any modifications, equivalent replacements, improvements, and the like made within the spirit and principle of the present disclosure shall fall within the protection scope of the present disclosure.

### Claims

1.  A method for beam management, comprising:
    selecting a target beam resource from K beam resources based on confidences respectively corresponding to the K beam resources, wherein K is an integer greater than or equal to 1.

**2.** The method according to claim 1, wherein selecting the target beam resource from the K beam resources based on the confidences respectively corresponding to the K beam resources comprises:
determining a beam resource with a confidence that satisfies a first condition in the K beam resources as the target beam resource.

**3.** The method according to claim 2, wherein the first condition comprises at least one of:

the confidence being the highest;
the confidence being greater than or equal to a first threshold; or
the confidence falling within a first value range.

**4.** The method according to claim 1, wherein selecting the target beam resource from the K beam resources based on the confidences respectively corresponding to the K beam resources comprises:

selecting at least one candidate beam resource from the K beam resources based on the confidences respectively corresponding to the K beam resources;
acquiring beam quality information respectively corresponding to the at least one candidate beam resource by performing a beam quality verification on the at least one candidate beam resource; and
selecting the target beam resource based on the beam quality information respectively corresponding to the at least one candidate beam resource.

**5.** The method according to claim 4, wherein selecting the at least one candidate beam resource from the K beam resources based on the confidences respectively corresponding to the K beam resources comprises:

determining a beam resource with a confidence that satisfies a second condition in the K beam resources as the candidate beam resource;
wherein the second condition comprises at least one of:

the confidence being less than or equal to a second threshold;
the confidence not falling within a first value range; or
the confidence falling within a second value range.

**6.** The method according to any one of claims 1 to 5, further comprising:

acquiring confidences respectively corresponding to N beam resources acquired by an AI model, wherein N is an integer greater than 1; and
selecting the K beam resources from the N beam resources based on the confidences respectively corresponding to the N beam resources.

**7.** The method according to any one of claims 1 to 5, further comprising:
acquiring confidence information of the K beam resources, wherein the confidence information is used to indicate the confidences respectively corresponding to the K beam resources.

**8.** The method according to claim 7, wherein the confidence information comprises confidence indicators respectively corresponding to the K beam resources, wherein a confidence indicator corresponding to an $i^{th}$ beam resource of the K beam resources is used to indicate the confidence corresponding to the $i^{th}$ beam resource, i being a positive integer less than or equal to K.

**9.** The method according to claim 8, wherein

the confidence indicator is represented by 1 bit; and
in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

10. The method according to claim 9, wherein the first threshold is related to a value of K.

11. The method according to claim 8, wherein

the confidence indicator is represented by 2 bits; and
in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range;
wherein the first value range, the second value range, the third value range, and the fourth value range are different from each other.

12. The method according to any one of claims 7 to 11, further comprising:
transmitting configuration information, the configuration information comprising at least one of first information or second information, wherein the first information is used to indicate a value of K, and the second information is used to indicate a reporting mode for the confidence information.

13. The method according to any one of claims 7 to 12, wherein for a plurality of time units in a time domain, the plurality of time units have respective confidence information, wherein confidence information corresponding to a first time unit of the plurality of time units is used to indicate the confidences respectively corresponding to the K beam resources selected in the first time unit.

14. The method according to any one of claims 7 to 12, wherein in a case where K is 1, and for a plurality of time units in a time domain, beam resources selected in the plurality of time units are the same and confidences corresponding to the beam resources in the plurality of time units fall within a same quantization interval, the plurality of time units correspond to same confidence information, wherein the confidence information is used to indicate the beam resources selected in the plurality of time units and the confidences corresponding to the beam resources.

15. A method for beam management, applicable to a terminal device, the method comprising:
transmitting confidence information of K beam resources to a network device, wherein the confidence information is used to indicate confidences respectively corresponding to the K beam resources, K being an integer greater than or equal to 1.

16. The method according to claim 15, wherein the confidence information comprises confidence indicators respectively corresponding to the K beam resources, wherein a confidence indicator corresponding to an $i^{th}$ beam resource of the K beam resources is used to indicate the confidence corresponding to the $i^{th}$ beam resource, i being a positive integer less than or equal to K.

17. The method according to claim 16, wherein

the confidence indicator is represented by 1 bit; and
in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

18. The method according to claim 17, wherein the first threshold is related to a value of K.

19. The method according to claim 16, wherein

the confidence indicator is represented by 2 bits; and
in a case where the confidence indicator corresponding to the $i^{th}$ beam resource is 00, the confidence indicator is used to indicate that the confidence corresponding to the $i^{th}$ beam resource belongs to a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range;
wherein the first value range, the second value range, the third value range, and the fourth value range are different from each other.

20. The method according to any one of claims 15 to 19, further comprising:
receiving configuration information from the network device, the configuration information comprising at least one of first information or second information, wherein the first information is used to indicate a value of K, and the second information is used to indicate a reporting mode for the confidence information.

21. The method according to any one of claims 15 to 20, further comprising:

acquiring confidences respectively corresponding to N beam resources acquired by an AI model, wherein N is an integer greater than 1; and
selecting the K beam resources from the N beam resources based on the confidences respectively corresponding to the N beam resources.

22. The method according to any one of claims 15 to 21, further comprising:

receiving a reference signal, the reference signal being transmitted by the network device over at least one candidate beam resource, wherein the at least one candidate beam resource is selected from the K beam resources;
acquiring beam quality information respectively corresponding to the at least one candidate beam resource by measuring the reference signal transmitted over the at least one candidate beam resource; and
transmitting the beam quality information respectively corresponding to the at least one candidate beam resource to the network device.

23. The method according to any one of claims 15 to 22, wherein for a plurality of time units in a time domain, the plurality of time units have respective confidence information, wherein confidence information corresponding to a first time unit of the plurality of time units is used to indicate the confidences respectively corresponding to the K beam resources selected in the first time unit.

24. The method according to any one of claims 15 to 22, wherein in a case where K is 1, and for a plurality of time units in a time domain, beam resources selected in the plurality of time units are the same and confidences corresponding to the beam resources in the plurality of time units fall within a same quantization interval, the plurality of time units correspond to same confidence information, wherein the confidence information is used to indicate the beam resources selected in the plurality of time units and the confidences corresponding to the beam resources.

25. A method for beam management, applicable to a network device, the method comprising:
receiving confidence information of K beam resources from a terminal device, wherein the confidence information is used to indicate confidences respectively corresponding to the K beam resources, K being an integer greater than or equal to 1.

26. The method according to claim 25, wherein subsequent to receiving the confidence information of the K beam resources from the terminal device, the method further comprises:

selecting a target beam resource from the K beam resources based on the confidences respectively corresponding to the K beam resources.

27. The method according to claim 26, wherein selecting the target beam resource from the K beam resources based on the confidences respectively corresponding to the K beam resources comprises:
determining a beam resource with a confidence that satisfies a first condition in the K beam resources as the target beam resource.

28. The method according to claim 27, wherein the first condition comprises at least one of:

> the confidence being the highest;
> the confidence being greater than or equal to a first threshold; or
> the confidence falling within a first value range.

29. The method according to claim 26, wherein selecting the target beam resource from the K beam resources based on the confidences respectively corresponding to the K beam resources comprises:

> selecting at least one candidate beam resource from the K beam resources based on the confidences respectively corresponding to the K beam resources;
> acquiring beam quality information respectively corresponding to the at least one candidate beam resource by performing a beam quality verification on the at least one candidate beam resource; and
> selecting the target beam resource based on the beam quality information respectively corresponding to the at least one candidate beam resource.

30. The method according to claim 29, wherein selecting the at least one candidate beam resource from the K beam resources based on the confidences respectively corresponding to the K beam resources comprises:

> determining a beam resource with a confidence that satisfies a second condition in the K beam resources as the candidate beam resource;
> wherein the second condition comprises at least one of:

>> the confidence being less than or equal to a second threshold;
>> the confidence not falling within a first value range; or
>> the confidence falling within a second value range.

31. The method according to any one of claims 25 to 30, wherein the confidence information comprises confidence indicators respectively corresponding to the K beam resources, wherein a confidence indicator corresponding to an $i^{th}$ beam resource of the K beam resources is used to indicate the confidence corresponding to the $i^{th}$ beam resource, i being a positive integer less than or equal to K.

32. The method according to claim 31, wherein

> the confidence indicator is represented by 1 bit; and
> in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
> in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

33. The method according to claim 32, wherein the first threshold is related to a value of K.

34. The method according to claim 31, wherein

the confidence indicator is represented by 2 bits; and

in a case where the confidence indicator corresponding to the $i^{th}$ beam resource is 00, the confidence indicator is used to indicate that the confidence corresponding to the $i^{th}$ beam resource falls within a first value range; or in a case where the confidence indicator corresponding to the $i^{th}$ beam resource is 01, the confidence indicator is used to indicate that the confidence corresponding to the $i^{th}$ beam resource belongs to a second value range; or in a case where the confidence indicator corresponding to the $i^{th}$ beam resource is 10, the confidence indicator is used to indicate that the confidence corresponding to the $i^{th}$ beam resource falls within a third value range; or in a case where the confidence indicator corresponding to the $i^{th}$ beam resource is 11, the confidence indicator is used to indicate that the confidence corresponding to the $i^{th}$ beam resource falls within a fourth value range;

wherein the first value range, the second value range, the third value range, and the fourth value range are different from each other.

35. The method according to any one of claims 25 to 34, further comprising:
transmitting configuration information to the terminal device, the configuration information comprising first information and/or second information, wherein the first information is used to indicate a value of K, and the second information is used to indicate a reporting mode for the confidence information.

36. The method according to any one of claims 25 to 35, wherein for a plurality of time units in a time domain, the plurality of time units have respective confidence information, wherein confidence information corresponding to a first time unit of the plurality of time units is used to indicate the confidences respectively corresponding to the K beam resources selected in the first time unit.

37. The method according to any one of claims 25 to 35, wherein in a case where K is 1, and for a plurality of time units in a time domain, beam resources selected in the plurality of time units are the same and confidences corresponding to the beam resources in the plurality of time units fall within a same quantization interval, the plurality of time units correspond to same confidence information, wherein the confidence information is used to indicate the beam resources selected in the plurality of time units and the confidences corresponding to the beam resources.

38. An apparatus for beam management, comprising:
a selecting module, configured to select a target beam resource from K beam resources based on confidences respectively corresponding to the K beam resources, wherein K is an integer greater than or equal to 1.

39. The apparatus according to claim 38, wherein the selecting module is configured to:
determine a beam resource with a confidence that satisfies a first condition in the K beam resources as the target beam resource.

40. The apparatus according to claim 39, wherein the first condition comprises at least one of:

the confidence being the highest;
the confidence being greater than or equal to a first threshold; or
the confidence falling within a first value range.

41. The apparatus according to claim 38, wherein the selecting module is configured to:

select at least one candidate beam resource from the K beam resources based on the confidences respectively corresponding to the K beam resources;
acquire beam quality information respectively corresponding to the at least one candidate beam resource by performing a beam quality verification on the at least one candidate beam resource; and
select the target beam resource based on the beam quality information respectively corresponding to the at least one candidate beam resource.

42. The apparatus according to claim 41, wherein the selecting module is configured to determine a beam resource with a confidence that satisfies a second condition in the K beam resources as the candidate beam resource;
wherein the second condition comprises at least one of:

the confidence being less than or equal to a second threshold;
the confidence not falling within a first value range; or
the confidence falling within a second value range.

43. The apparatus according to any one of claims 38 to 42, further comprising:

> an acquiring module, configured to acquire confidences respectively corresponding to N beam resources acquired by an AI model, wherein N is an integer greater than 1;
> wherein the selecting module is further configured to select the K beam resources from the N beam resources based on the confidences respectively corresponding to the N beam resources.

44. The apparatus according to any one of claims 38 to 42, further comprising:
an acquiring module, configured to acquire confidence information of the K beam resources, wherein the confidence information is used to indicate the confidences respectively corresponding to the K beam resources.

45. The apparatus according to claim 44, wherein the confidence information comprises confidence indicators respectively corresponding to the K beam resources, wherein a confidence indicator corresponding to an $i^{th}$ beam resource of the K beam resources is used to indicate the confidence corresponding to the $i^{th}$ beam resource, i being a positive integer less than or equal to K.

46. The apparatus according to claim 45, wherein

> the confidence indicator is represented by 1 bit; and
> in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
> in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

47. The apparatus according to claim 46, wherein the first threshold is related to a value of K.

48. The apparatus according to claim 45, wherein

> the confidence indicator is represented by 2 bits; and
> in a case where the confidence indicator corresponding to the $i^{th}$ beam resource is 00, the confidence indicator is used to indicate that the confidence corresponding to the $i^{th}$ beam resource falls within a first value range; or
> in a case where the confidence indicator corresponding to the $i^{th}$ beam resource is 01, the confidence indicator is used to indicate that the confidence corresponding to the $i^{th}$ beam resource falls within a second value range; or
> in a case where the confidence indicator corresponding to the $i^{th}$ beam resource is 10, the confidence indicator is used to indicate that the confidence corresponding to the $i^{th}$ beam resource falls within a third value range; or
> in a case where the confidence indicator corresponding to the $i^{th}$ beam resource is 11, the confidence indicator is used to indicate that the confidence corresponding to the $i^{th}$ beam resource falls within a fourth value range;
> wherein the first value range, the second value range, the third value range, and the fourth value range are different from each other.

49. The apparatus according to any one of claims 44 to 48, further comprising:
a transmitting module, configured to transmit configuration information, the configuration information comprising first information and/or second information, wherein the first information is used to indicate a value of K, and the second information is used to indicate a reporting mode for the confidence information.

50. The apparatus according to any one of claims 44 to 49, wherein for a plurality of time units in a time domain, the plurality of time units have respective confidence information, wherein confidence information corresponding to a first time unit of the plurality of time units is used to indicate the confidences respectively corresponding to the K beam resources selected in the first time unit.

51. The apparatus according to any one of claims 44 to 49, wherein in a case where K is 1, and for a plurality of time units in a time domain, beam resources selected in the plurality of time units are the same and confidences corresponding to the beam resources in the plurality of time units fall within a same quantization interval, the plurality of time units correspond to same confidence information, wherein the confidence information is used to indicate the beam resources selected in the plurality of time units and the confidences corresponding to the beam resources.

**52.** An apparatus for beam management, comprising:
a transmitting module, configured to transmit confidence information of K beam resources to a network device, wherein the confidence information is used to indicate confidences respectively corresponding to the K beam resources, K being an integer greater than or equal to 1.

**53.** The apparatus according to claim 52, wherein the confidence information comprises confidence indicators respectively corresponding to the K beam resources, wherein a confidence indicator corresponding to an $i^{th}$ beam resource of the K beam resources is used to indicate the confidence corresponding to the $i^{th}$ beam resource, i being a positive integer less than or equal to K.

**54.** The apparatus according to claim 53, wherein

the confidence indicator is represented by 1 bit; and
in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

**55.** The apparatus according to claim 54, wherein the first threshold is related to a value of K.

**56.** The apparatus according to claim 53, wherein

the confidence indicator is represented by 2 bits; and
in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range;
wherein the first value range, the second value range, the third value range, and the fourth value range are different from each other.

**57.** The apparatus according to any one of claims 52 to 56, further comprising:
a receiving module, configured to receive configuration information transmitted by the network device, the configuration information comprising at least one of first information or second information, wherein the first information is used to indicate a value of K, and the second information is used to indicate a reporting mode for the confidence information.

**58.** The apparatus according to any one of claims 52 to 57, further comprising:

an acquiring module, configured to acquire confidences respectively corresponding to N beam resources acquired by an AI model, wherein N is an integer greater than 1; and
a selecting module, configured to select the K beam resources from the N beam resources based on the confidences respectively corresponding to the N beam resources.

**59.** The apparatus according to any one of claims 52 to 58, further comprising:

a receiving module, configured to receive a reference signal, the reference signal being transmitted by the network device over at least one candidate beam resource, wherein the at least one candidate beam resource is selected from the K beam resources; and

a measuring module, configured to acquire beam quality information respectively corresponding to the at least one candidate beam resource by measuring the reference signal transmitted over at least one candidate beam resource;

wherein the transmitting module is further configured to transmit the beam quality information respectively corresponding to the at least one candidate beam resource to the network device.

60. The apparatus according to any one of claims 52 to 59, wherein for a plurality of time units in a time domain, the plurality of time units have respective confidence information, wherein confidence information corresponding to a first time unit of the plurality of time units is used to indicate the confidences respectively corresponding to the K beam resources selected in the first time unit.

61. The apparatus according to any one of claims 52 to 59, wherein in a case where K is 1, and for a plurality of time units in a time domain, beam resources selected in the plurality of time units are the same and confidences corresponding to the beam resources in the plurality of time units fall within a same quantization interval, the plurality of time units correspond to same confidence information, wherein the confidence information is used to indicate the beam resources selected in the plurality of time units and the confidences corresponding to the beam resources.

62. An apparatus for beam management, comprising:
a receiving module, configured to receive confidence information of K beam resources transmitted by a terminal device, wherein the confidence information is used to indicate confidences respectively corresponding to the K beam resources, K being an integer greater than or equal to 1.

63. The apparatus according to claim 62, further comprising:
a selecting module, configured to select a target beam resource from the K beam resources based on the confidences respectively corresponding to the K beam resources.

64. The apparatus according to claim 63, wherein the selecting module is configured to determine a beam resource with a confidence that satisfies a first condition in the K beam resources as the target beam resource.

65. The apparatus according to claim 64, wherein the first condition comprises at least one of:

the confidence being the highest;
the confidence being greater than or equal to a first threshold; or
the confidence falling within a first value range.

66. The apparatus according to claim 63, wherein the selecting module is configured to:

select at least one candidate beam resource from the K beam resources based on the confidences respectively corresponding to the K beam resources;
acquire beam quality information respectively corresponding to the at least one candidate beam resource by performing a beam quality verification on the at least one candidate beam resource; and
select the target beam resource based on the beam quality information respectively corresponding to the at least one candidate beam resource.

67. The apparatus according to claim 66, wherein the selecting module is configured to determine a beam resource with a confidence that satisfies a second condition in the K beam resources as the candidate beam resource;
wherein the second condition comprises at least one of:

the confidence being less than or equal to a second threshold;
the confidence not falling within a first value range; or
the confidence falling within a second value range.

68. The apparatus according to any one of claims 62 to 67, wherein the confidence information comprises confidence indicators respectively corresponding to the K beam resources, wherein a confidence indicator corresponding to an $i^{th}$ beam resource of the K beam resources is used to indicate the confidence corresponding to the $i^{th}$ beam resource, i being a positive integer less than or equal to K.

69. The apparatus according to claim 68, wherein

the confidence indicator is represented by 1 bit; and
in a case where the confidence indicator corresponding to the $i^{th}$ beam resource is a first numerical value, the confidence indicator is used to indicate that the confidence corresponding to the $i^{th}$ beam resource is greater than or equal to a first threshold; and in a case where the confidence indicator corresponding to the $i^{th}$ beam resource is a second numerical value, the confidence indicator is used to indicate that the confidence corresponding to the $i^{th}$ beam resource is less than the first threshold; or
in a case where the confidence indicator corresponding to the $i^{th}$ beam resource is a first numerical value, the confidence indicator is used to indicate that the confidence corresponding to the $i^{th}$ beam resource is greater than a first threshold; and in a case where the confidence indicator corresponding to the $i^{th}$ beam resource is a second numerical value, the confidence indicator is used to indicate that the confidence corresponding to the $i^{th}$ beam resource is less than or equal to the first threshold.

70. The apparatus according to claim 69, wherein the first threshold is related to a value of K.

71. The apparatus according to claim 68, wherein

the confidence indicator is represented by 2 bits; and
in a case where the confidence indicator corresponding to the $i^{th}$ beam resource is 00, the confidence indicator is used to indicate that the confidence corresponding to the $i^{th}$ beam resource falls within a first value range; or
in a case where the confidence indicator corresponding to the $i^{th}$ beam resource is 01, the confidence indicator is used to indicate that the confidence corresponding to the $i^{th}$ beam resource falls within a second value range; or
in a case where the confidence indicator corresponding to the $i^{th}$ beam resource is 10, the confidence indicator is used to indicate that the confidence corresponding to the $i^{th}$ beam resource falls within a third value range; or
in a case where the confidence indicator corresponding to the $i^{th}$ beam resource is 11, the confidence indicator is used to indicate that the confidence corresponding to the $i^{th}$ beam resource falls within a fourth value range;
wherein the first value range, the second value range, the third value range, and the fourth value range are different from each other.

72. The apparatus according to any one of claims 62 to 71, further comprising:
a transmitting module, configured to transmit configuration information to the terminal device, the configuration information comprising first information and/or second information, wherein the first information is used to indicate a value of K, and the second information is used to indicate a reporting mode for the confidence information.

73. The apparatus according to any one of claims 62 to 72, wherein for a plurality of time units in a time domain, the plurality of time units have respective confidence information, wherein confidence information corresponding to a first time unit of the plurality of time units is used to indicate the confidences respectively corresponding to the K beam resources selected in the first time unit.

74. The apparatus according to any one of claims 62 to 72, wherein in a case where K is 1, and for a plurality of time units in a time domain, beam resources selected in the plurality of time units are the same and confidences corresponding to the beam resources in the plurality of time units fall within a same quantization interval, the plurality of time units correspond to same confidence information, wherein the confidence information is used to indicate the beam resources selected in the plurality of time units and the confidences corresponding to the beam resources.

75. A communication device, comprising: a processor and a memory; wherein the memory is configured to store at least one computer program therein, wherein the processor is configured to load and run the at least one computer program, to cause the communication device to perform the method as defined in any one of claims 1 to 14, or the method as defined in any one of claims 15 to 24, or the method as defined in any one of claims 25 to 37.

76. A computer-readable storage medium, storing at least one computer program therein, wherein the at least one computer program, when loaded and run by a processor, causes the processor to perform the method as defined in any one of claims 1 to 14, or the method as defined in any one of claims 15 to 24, or the method as defined in any one of claims 25 to 37.

**77.** A chip, comprising: at least one programmable logic circuit and/or at least one program instruction, wherein the chip, when running, is caused to perform the method as defined in any one of claims 1 to 14, or the method as defined in any one of claims 15 to 24, or the method as defined in any one of claims 25 to 37.

**78.** A computer program product, comprising at least one computer program stored in a computer-readable storage medium; wherein the at least one computer program, when read from the computer-readable storage medium and loaded and run by a processor, causes the processor to perform method as defined in any one of claims 1 to 14, or the method as defined in any one of claims 15 to 24, or the method as defined in any one of claims 25 to 37.

FIG. 1

FIG. 2

Input layer

Output layer

Hidden layer

FIG. 3

Input layer

Convolutional layer

Pooling layer

Convolutional layer

Pooling layer

Fully-connected layer

Output layer

FIG. 4

FIG. 5

(a)                       (b)

FIG. 6

710

Selecting a target beam resource from K beam resources based on confidences respectively corresponding to the K beam resources, wherein K is an integer greater than or equal to 1

FIG. 7

FIG. 8

AI model predicts K beam resources

910, the network device transmits configuration information to the terminal device, the configuration information including first information and/or second information, wherein the first information is used to indicate a value of the K, and the second information is used to indicate a reporting mode of the confidence information

920, the terminal device transmits confidence information of K beam resources to the network device, wherein the confidence information is used to indicate the confidences respectively corresponding to the K beam resources, wherein K is an integer greater than or equal to 1

Network device

930, the network device selects the target beam resource from the K beam resources based on the confidences respectively corresponding to the K beam resources

Terminal device

FIG. 9

Configuration information

Confidence information of K
beam resources

Network
device

AI model predicts
K beam resources

Terminal
device

Directly determines
the target beam
resource if CI=1

CI=0

Reference signal

L1-RSRP

Performs beam scanning if the
beam resource does not satisfy
the third condition

Network device

Terminal
device

FIG. 10

Configuration information

AI model predicts
K beam resources

Confidence information of K
beam resources

Network
device

Terminal
device

CI=1 (N1 and N2)

Discards if CI=0 (N3,
N4, N5, N6)

Reference signal

Index and L1-RSRP of
optimal beam resource (N1)

Terminal
device

Network device

FIG. 11

Configuration information

AI model predicts
K beam resources

Confidence information of K
beam resources

Network
device

Terminal
device

Performs beam scanning if only
Set{CI=00} exists

CI=11 (N1) exists or
CI=10 (N2) exists

CI=11 or CI=10 does not
exist, and CI=01 exists

Reference signal

Index and L1-RSRP of
optimal beam resource (N1)

Terminal
device

Network device

FIG. 12

AI model predicts
K beam resources

Beam quality verification
indication

1310, the network device selects a
target beam resource from K beam
resources based on confidences
respectively corresponding to the K
beam resources

Network
device

Terminal
device

FIG. 13

AI model predicts K
beam resources

1410, the terminal device selects a target beam resource from K beam resources
based on confidences respectively corresponding to the K beam resources

1420, the terminal device transmits an index of the target beam resource to the
network device

Network
device

Terminal
device

FIG. 14

1500

Selecting module — 1510

FIG. 15

1500

Transmitting module — 1530

Acquiring module — 1520

Selecting module — 1510

FIG. 16

1700

Transmitting module — 1710

FIG. 17

1700

1720

1730    Acquiring module        Receiving module

1740    Selecting module    Transmitting module    1710

1750

Measuring module

FIG. 18

1900

1910

Receiving module

FIG. 19

1900

1930

Transmitting module

1910

Receiving module

1920

Selecting module

FIG. 20

Terminal device 2100

Processor 2101

Transceiver 2102

Wireless communication chip

RF antenna

Wireless communication component

Memory 2103

FIG. 21

Network device 2200

Processor 2201

Transceiver 2202

Wired communication chip

Wired interface

Wired communication component

Wireless communication chip

RF antenna

Wireless communication component

Memory 2203

FIG. 22

## INTERNATIONAL SEARCH REPORT

| International application No. |
|---|
| **PCT/CN2022/130729** |

| A. | CLASSIFICATION OF SUBJECT MATTER |
|---|---|

H04W72/04(2023.01)i;  H04B7/06(2006.01)i

According to International Patent Classification (IPC) or to both national classification and IPC

| B. | FIELDS SEARCHED |
|---|---|

Minimum documentation searched (classification system followed by classification symbols)

IPC:H04W,H04B

Documentation searched other than minimum documentation to the extent that such documents are included in the fields searched

Electronic data base consulted during the international search (name of data base and, where practicable, search terms used)

CNABS, CNTXT, ENTXT, WPABS, CNKI: 波束, 资源, 管理, 可信, 置信, 度, 权重, 最佳, 最优, 目标, 匹配, 相应, 确定, 选择, beam, resource, manag+, confidence, quantized, object, match+, corresponding, determin+, choos+

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021336682 A1 (QUALCOMM INC.) 28 October 2021 (2021-10-28) description, paragraphs [0082]-[0088], and figure 6 | 1-78 |
| X | CN 111756414 A (BEIJING UNISOC COMMUNICATION TECHNOLOGY CO., LTD.) 09 October 2020 (2020-10-09) description, paragraphs [0044]-[0080], and figure 2 | 1-78 |
| A | CN 113645698 A (FUJITSU LTD.) 12 November 2021 (2021-11-12) entire document | 1-78 |
| A | WO 2022081510 A1 (QUALCOMM INC.) 21 April 2022 (2022-04-21) entire document | 1-78 |
| A | WO 2022228018 A1 (HUAWEI TECHNOLOGIES CO., LTD.) 03 November 2022 (2022-11-03) entire document | 1-78 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 July 2023** | **19 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/130729**

| Patent document cited in search report | | | Publication date (day/month/year) | Patent family member(s) | | | Publication date (day/month/year) |
|---|---|---|---|---|---|---|---|
| US | 2021336682 | A1 | 28 October 2021 | US | 11595102 | B2 | 28 February 2023 |
| CN | 111756414 | A | 09 October 2020 | None | | | |
| CN | 113645698 | A | 12 November 2021 | None | | | |
| WO | 2022081510 | A1 | 21 April 2022 | BR | 112023006332 | A2 | 09 May 2023 |
| WO | 2022228018 | A1 | 03 November 2022 | None | | | |

Form PCT/ISA/210 (patent family annex) (July 2022)